# EUROPEAN PATENT SPECIFICATION

(11) **EP 2 799 167 B1**
(45) Date of publication and mention of the grant of the patent: **13.03.2019**
(21) Application number: 12863505.9
(22) Date of filing: 27.12.2012
(51) Int. Cl.: B23B 19/02, F16C 33/80, B23Q 11/08, F16J 15/447

(54) **SPINDLE DEVICE**
SPINDELVORRICHTUNG
DISPOSITIF À BROCHE

(30) Priority: 27.12.2011 JP 2011286334; 27.12.2011 JP 2011286607; 06.01.2012 JP 2012001570; 06.01.2012 JP 2012001571; 06.01.2012 JP 2012001572
(43) Date of publication of application: 05.11.2014
(60) Divisional application: 18173032.6
(73) Proprietor: NSK Ltd., Tokyo 141-8560 (JP)
(72) Inventor: INAGAKI, Yoshifumi, Maebashi-shi Gunma (JP); IWASAKI, Osamu, Maebashi-shi Gunma (JP); OGURI, Shoichiro, Maebashi-shi Gunma (JP); YONEYAMA, Hiroki, Maebashi-shi Gunma (JP); KATSUNO, Yoshiaki, Fujisawa-shi Kanagawa (JP)
(74) Representative: Grünecker Patent- und Rechtsanwälte PartG mbB
(86) International application number: PCT/JP2012/083979
(87) International publication number: WO 2013/100099

(56) References cited:
- EP-A1- 0 015 739
- DE-B- 1 062 568
- DE-U1- 20 113 651
- GB-A- 2 041 111
- GB-A- 2 151 724
- JP-A- H06 226 516
- JP-A- 2003 266 205
- JP-A- 2004 019 722
- JP-U- H02 116 068
- JP-U- H03 120 301
- JP-U- S62 130 265

## Description

### Technical Field

The present invention relates to a spindle apparatus according to the preamble of claim 1. Such a spindle apparatus is known from DE 201 13 651 U1. A similar spindle apparatus is known from GB 2 041 111 A and EP 0 015 739 A1. More particularly, the present invention relates to a spindle apparatus having waterproof function and suitable for use in machine tools.

### Background Art

A rotary shaft of a spindle apparatus applied to machining tools or the like is rotated at a high speed to allow cutting or polishing of a workpiece to be performed. In general, a great volume of machining liquid is supplied to lubricate or cool a cutting tool or a region to be machined upon machining. Namely, lubrication is intended to enhance a cutting characteristic, to suppress wear in a machining cutting edge, to extend tool life and the like. Also, cooling is intended to enhance machining accuracy by suppressing thermal expansion of the cutting tool or the workpiece, to enhance machining efficient by preventing thermal-welding in a machined region, to enhance surface quality of a machined surface and the like. The spindle apparatus can be near the machined region, and in this case, a large quantity of machining liquid can spatter on a front surface of the spindle apparatus. If the machining liquid enters a bearing, this causes poor lubrication or seizing of the bearing or the like, and accordingly, a waterproof performance of the bearing is important. In particular, for bearings of a grease sealed lubrication or grease supply lubrication, machining liquid easily enters the bearings and thus a higher waterproof performance is required, because a pressure inside the bearings is lower as compared with bearings of an oil-air lubrication or oil mist lubrication, in which a lubricant is supplied together with air.

In general, as a waterproof mechanism, contact seals, such as an oil seal or a V ring, are known. However, in a case where the contact seal is applied to a spindle apparatus used in a high-speed rotation in which a dmn value of a bearing arranged on a spindle is 1 million or larger (more preferably, 1.5 million or larger), there are problems in that heat generation in a contacted portion of the contact seal is increased and the seal member is worn, thereby making it difficult to keep the waterproof performance for a long time. Therefore, in the case of machining tools, a flinger is fixed to a frond end (tool side) of the spindle apparatus to be integrally rotated with a rotary shaft and a so-called labyrinth seal, which is a non-contact seal, is constructed by reducing a gap between the flinger and the housing, thereby providing waterproof. Together with such a labyrinth effect, the flinger, which is rotated at a high speed, radially outwardly throws off machining liquid fallen on the flinger due to centrifugal force, thereby preventing the machining liquid from entering the bearing.

Such a waterproof effect using the centrifugal force and the labyrinth effect of the flinger is effective when the centrifugal force is increased by using a higher rotation speed and a larger diameter flinger, and also the gap between the flinger and the housing becomes as small and long as possible. However, if the rotation speed becomes higher or the diameter of the flinger is increased, centrifugal force and a hoop stress exerted on the flinger are also proportionally increased.

As the related art for suppressing effects of centrifugal force, a tool holder is disclosed, in which a collet mounted to a tool is inserted in a tapered hole of a tool holding unit, a nut is screwed on the tool holding unit to fix the tool in the tool holding unit, and a carbon fiber layer is wound around an outer peripheral surface of the nut, thereby suppressing expansion of the nut due to centrifugal force (see, e.g., Patent Document 1).

According to a shaft seal apparatus for a rotary machine disclosed in Patent Document 2, a distal end of a flinger protruding from an end lid of the rotary machine has a large diameter tapered surface and thus action of the tapered surface according to rotation of the flinger causes a throw-off effect, thereby preventing rainwater or oil from entering from the outside.

According to a seal device of a spindle apparatus for a machine tool disclosed in Patent Document 3, a shielding plate which is integrally rotated with a distal end of a spindle is arranged to be opposed an distal end surface of a housing with interposing a gap therebetween, and a labyrinth portion is provided between the shielding plate and the distal end surface of the housing. By configuring in this way, intrusion of a coolant, which is splattered by colliding with a workpiece or the like, into the housing is prevented.

According to a spindle apparatus for a machine tool disclosed in Patent Document 4, a labyrinth seal formed by a spindle cap and an end cover is provided, the labyrinth seal is configured to have a labyrinth chamber, and also the labyrinth chamber is set to have a large volume so that, when a coolant liquid enters the labyrinth chamber through a gap between the spindle cap and the end cover, a pressure of the coolant is reduced in the labyrinth chamber to deteriorate flow of the coolant. In addition, intrusion of the coolant liquid into a bearing unit of the spindle is prevented without supplying a large volume of compressed air toward a distal end of the spindle through a gap between the spindle and a spindle housing of a spindle head.

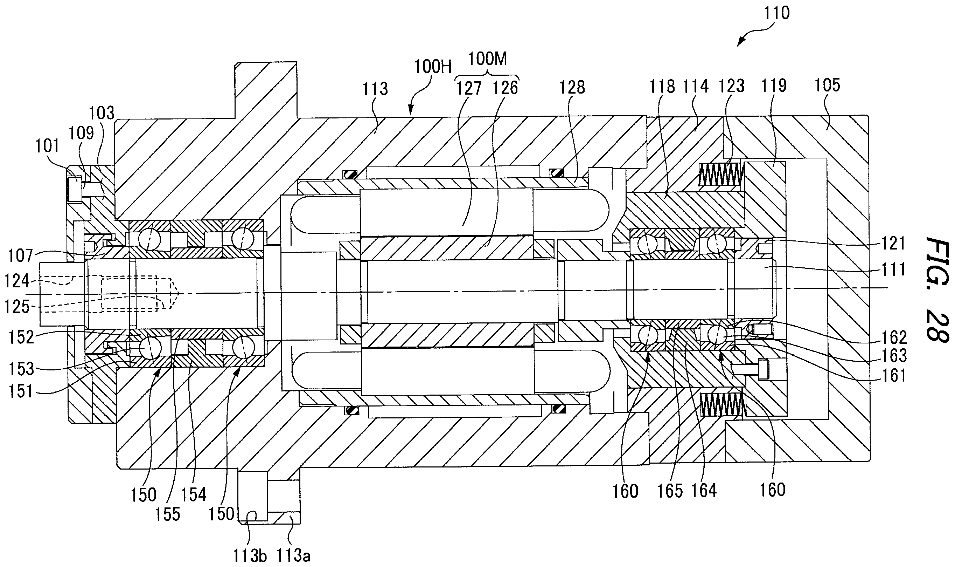

As shown in Fig. 28, a conventional spindle apparatus 110 is a built-in motor type spindle apparatus for machine tools, in which a rotary shaft 111 is rotatably supported in a housing 100H by two rows of front bearings 150, 150 for bearing a tool side (front side, i.e., a forward side in an axial direction) thereof and two rows of rear bearings 160, 160 for bearing a tool opposite side (rear side, i.e., a rearward side in the axial direction) thereof. The housing 100H includes a cover 101, a front lid 103, an outer cylinder 113, a rear housing 114, and a rear lid 105 in this order from the tool side. The outer cylinder 113 is fixed to a bracket (not shown) of a spindle head by inserting bolts through bolt holes 113b of a collar portion 113a provided on the front side thereof in an axial direction.

On the tool side of the rotary shaft 111, a tool attaching hole 124 and a female thread 125, which are axially formed through an axial center thereof, are provided. The tool attaching hole 124 and the female thread 125 are used to attach a tool (not shown), such as a cutting tool, to the rotary shaft 111. Alternatively, instead of the tool attaching hole 124 and the female thread 25, a conventional known drawbar (not shown) may be slidably inserted and fitted in the shaft center of the rotary shaft 11. The drawbar has a collet section for fixing a tool holder, and is urged in a direction toward the tool opposite side by a force of a disk spring (all not shown).

At an axially central portion of the rotary shaft 111 between the front bearings 150, 150 and the rear bearings 160, 160, a rotor 126 disposed to be integrally rotated with the rotary shaft 111 and a stator 127 disposed around the rotor 126 are provided. The stator 127 is fixed to the outer cylinder 13 by fitting a cooling jacket 128, which is shrinkage-fitted on the stator 127, in the outer cylinder 113 of the housing 100H. The rotor 126 and the stator 127 form a motor M, and by supplying electric power to the stator 127, a rotation force is generated on the rotor 1 26 to rotate the rotary shaft 111.

Each of the front bearings 150 is an angular ball bearing, which includes an outer ring 151, an inner ring 152, balls 153 as rolling bodies arranged with a contact angle and a cage (not shown), and each of rear bearings 160 is an angular ball bearing, which includes an outer ring 161, an inner ring 162, balls 163 as rolling bodies and a cage (not shown). The front bearings 150, 150 (a tandem arrangement) and the rear bearings 160, 160 (a tandem arrangement) are provided to form a back-to-back arrangement in cooperation with each other.

The outer rings 161, 161 of the rear bearings 160, 160 are fitted inside a sleeve 118, which is axially slidably fitted in the rear housing 114, and are axially positioned and fixed relative to the sleeve 118 by a rear bearing outer ring retainer 119, which is integrally fixed to the sleeve 118 by a bolt (not shown), while interposing an outer ring spacer 164 therebetween.

The inner rings 162, 162 of the rear bearings 160, 160 are fitted outside the rotary shaft 111, and are axially positioned and fixed relative to the rotary shaft 111 by another nut 121 fastened to the rotary shaft 111, while interposing an inner ring spacer 165 therebetween. A coil spring 123 is provided between the rear housing 114 and the rear bearing outer ring retainer 119, and a spring force of the coil spring 123 presses the rear bearing outer ring retainer 119 together with the sleeve 118 rearward. Thus, a preload is exerted on the rear bearings 160, 160.

The outer rings 151, 151 of the front bearings 150, 150 are fitted inside the outer cylinder 113, and are axially positioned and fixed relative to the outer cylinder 113 by the front lid 103, which is fastened to the outer cylinder 113 by a bolt, while interposing an outer ring spacer 154 therebetween.

The inner rings 152, 152 of the front bearings 150, 150 are fitted outside the rotary shaft 111, and are axially positioned and fixed relative to the rotary shaft 111 by a nut 107 fastened to the rotary shaft 111.

A labyrinth gap is formed between a radial inside portion of the front lid 103 and a radial outside portion of the nut 107, and also a cover 101 is fixed to the front lid 103 by a bolt 109 to cover the axial front sides of the front lid 103 and the nut 107, and thus even if machining liquid is adhered on a front surface of the spindle apparatus 110, intrusion of the machining liquid into the front bearings 150 supporting the rotary shaft 111 is prevented.

Further, there is disclosed a spindle apparatus for a machine tool, in which a fiber layer obtained by winding fibers having a small specific gravity and a large longitudinal elastic modulus is provided in a groove formed in an outer peripheral surface of a tool attaching end, thereby suppressing expansion of the spindle (see, e.g., Patent Document 5).

### Prior Art Document

### Patent Document

Patent Document 1: JP H06-226516 A
Patent Document 2: JP H02-5655 U
Patent Document 3: JP 2002-263982 A
Patent Document 4: JP 2010-076045 A
Patent Document 5: JP 3262395 B2

### Summary of Invention

### Problem to be Solved by Invention

Generally, a flinger is made of metal material, such as SC, SCM, SUS, AL, or CU material. Thus, if a diameter of the flinger is increased to allow a large centrifugal force to be exerted on machining liquid fallen on the flinger, a large centrifugal force is exerted on the flinger itself, in particular, on a radially outer side thereof. In high-speed rotation, in which a dmn value of a bearing is 1 million or larger as in a rotary shaft of machining tools, the flinger can be deformed by centrifugal force, and in the extreme case, the centrifugal force can be exceed the tensile strength of the flinger, thereby causing fracture of the flinger. Therefore, it is necessary to limit the diameter of the flinger or the rotation speed of the rotary shaft to an extent in which an influence of the centrifugal force is acceptable.

In a conventional spindle apparatus used in an environment in which a dmn value of the bearing is 1 million or larger, there is room for improvement in terms of waterproof performance because a radial dimension of the flinger has been limited taking into account a magnitude of the centrifugal force.

Also, under a high-speed rotation condition as described above, an expansion amount of a fitting portion between the rotary shaft, outside which the flinger is fitted, and the flinger due to centrifugal force generally becomes larger on the flinger side thereof. In the case where a dmn value of the bearing is 1 million or larger, fitting between the rotary shaft and the flinger is typically adapted to provide a slight radial clearance of about 0 to few tens µm between both. However, if a strength of the flinger is not suitably designed, because the radial clearance is increased due to a difference in centrifugal expansion so that under the high-speed rotation condition, contact rotation of the flinger is caused, there are problems in that an abnormal vibration due to unbalancing is occurred, contact between the flinger and the housing in the labyrinth is poor, and the like. In addition, fretting wear at the fitting portion or creep behavior of the rotary shaft and the flinger is also occurred. Thus, if such problems are occurred between the flinger and the rotary shaft, the expensive high-precision rotary shaft needs to be repaired, and in the worst case, there is also a problem in that the rotary shaft cannot be used.

Such problems are not limited to the rotary shaft and the flinger, and can occur between two members in a case where the flinger includes two members.

Also, in the conventional spindle apparatus 110 shown in Fig. 28, there is a problem in that, when a large amount of liquid is adhered on the front surface of the spindle apparatus 110, the liquid enters the front bearings 150 through a labyrinth gap between the front lid 103 and the nut 107, thereby damaging the front bearings 150.

The present invention has been made in view of the foregoing problems, and an object thereof is to provide a spindle apparatus having a good waterproof function.

### Means for Solving the Problem

The above object of the present invention is achieved by the subject matter of claim 1. Advantageous embodiments are laid down in the dependent claims 2 and 3.

### Effects of Invention

According to the spindle apparatus of the present invention, the annular portion of the flinger arranged to be opposed the outer peripheral surface of the housing is formed in a tapered shape, a thickness of which is reduced along an axial direction away from the disk portion. Therefore, deformation due to centrifugal force is hardly occurred on the distal end side of the annular portion to suppress increase of a gap at an entrance of the labyrinth, thereby exhibiting a good waterproof function.

Further, if the circumferential groove provided in a recessed manner on the outer peripheral surface of the housing is configured such that the end portion thereof on the side of the disk portion overlaps the annular portion with respect to the axial direction, a liquid can be flown into the circumferential groove during stop of the spindle, thereby preventing the liquid from entering a labyrinth gap between the inner peripheral surface of the annular portion and the outer peripheral surface of the housing. In particular, when the outer peripheral surface of the housing forming the labyrinth has a tapered shape, liquid can easily enter the labyrinth during stop of the spindle, but due to the aforesaid configuration, the liquid can be prevented from entering the labyrinth.

Furthermore, if at least a portion of the flinger is formed of a carbon fiber composite material, a mass thereof is smaller as compared with a metal so that centrifugal force is decreased, and also a tensile strength thereof is higher as compared with a metal, thereby further suppressing deformation due to the centrifugal force. Thus, the flinger can be used at a higher dmn value (bearing) and also can increase a radial length and an axial length thereof, so that a liquid can be strongly thrown off and also a lengthened labyrinth can be obtained, thereby achieving a good waterproof performance.

According to the spindle apparatus of the present invention, even if liquid enters a labyrinth gap between the outer peripheral surface of the housing and the annular portion of the flinger, the liquid can be gathered in the circumferential groove provided on the outer peripheral surface of the housing, thereby preventing the liquid from entering the bearing.

Moreover, because the inner peripheral surface of the annular portion of the flinger is formed in a tapered shape, a radial distance of which from the rotary shaft is increased along an axial direction away from the disk portion of the flinger, centrifugal force to be exerted on a liquid adhered on the inner peripheral surface of the annular portion of the flinger is increased along the axial direction away from the disk portion of the flinger. Thus, even if liquid enters a labyrinth gap between the outer peripheral surface of the housing and the annular portion of the flinger, an effect of discharging the liquid to the outside can be enhanced.

### Brief Description of Drawings

Fig. 1 is a sectional view of a spindle apparatus according to a first Example.
Fig. 2 is an enlarged view of a main portion of the spindle apparatus shown in Fig. 1.
Fig. 3 is an enlarged view of a main portion of a spindle apparatus according to a second Example.
Fig. 4 is an enlarged view of a main portion of a spindle apparatus according to a third Example.
Fig. 5 is an enlarged view of a main portion of a spindle apparatus according to a first embodiment of the invention.
Fig. 6(a) is a further enlarged view of the spindle apparatus shown in Fig. 5, Fig. 6(b) is an enlarged view of a spindle apparatus according to a modified embodiment thereof, and Fig. 6(c) is an enlarged view of a spindle apparatus according to another modified embodiment thereof.
Fig. 7 is an enlarged view of a main portion of a spindle apparatus according to a fourth Example.
Fig. 8 is a further enlarged view of the spindle apparatus shown in Fig. 7.
Fig. 9 is an enlarged view of a main portion of a spindle apparatus according to a second embodiment of the invention.
Fig. 10 is a further enlarged view of the spindle apparatus shown in Fig. 9.
Fig. 11 is an enlarged view of a main portion of a spindle apparatus according to a fifth Example.
Fig. 12 is a sectional view of a spindle apparatus according to a modified embodiment of the first embodiment of the invention.
Fig. 13 is a sectional view of a spindle apparatus according to a modified example of the fourth Example.

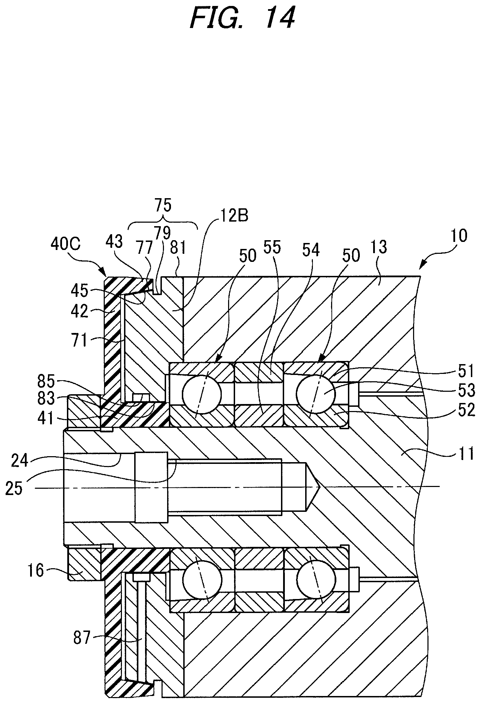

Fig. 14 is a sectional view of a spindle apparatus according to a modified emodiment of the second embodiment of the invention.
Fig. 15 is a sectional view of a spindle apparatus according to a modified example of the fifth Example.
Fig. 16 is a sectional view of a spindle apparatus according to a sixth Example.
Fig. 17 is an enlarged view of a main portion of the spindle apparatus shown in Fig. 16.
Fig. 18 is an enlarged view of a main portion of a spindle apparatus according to a seventh Example.
Fig. 19 is an enlarged view of a main portion of a spindle apparatus according to an eighth Example.
Fig. 20 is an enlarged view of a main portion of a spindle apparatus according to a ninth Example.
Fig. 21 is an enlarged view of a main portion of a spindle apparatus according to a third embodiment of the invention.
Fig. 22 is a sectional view of a spindle apparatus according to a tenth Example.
Fig. 23(a) is a sectional view of a portion of a modified example of the tenth Example, and Fig. 23(b) is a sectional view of a portion of another modified example of the tenth Example.
Fig. 24 is an enlarged view of a main portion of a spindle apparatus according to an eleventh Example.
Fig. 25 is an enlarged view of a main portion of a spindle apparatus according to a twelfth Example.
Fig. 26 is an enlarged view of a main portion of a spindle apparatus according to a thirteenth Example.
Fig. 27 is an enlarged view of a main portion of a spindle apparatus according to a fourteenth Example.
Fig. 28 is a sectional view of a conventional spindle apparatus.

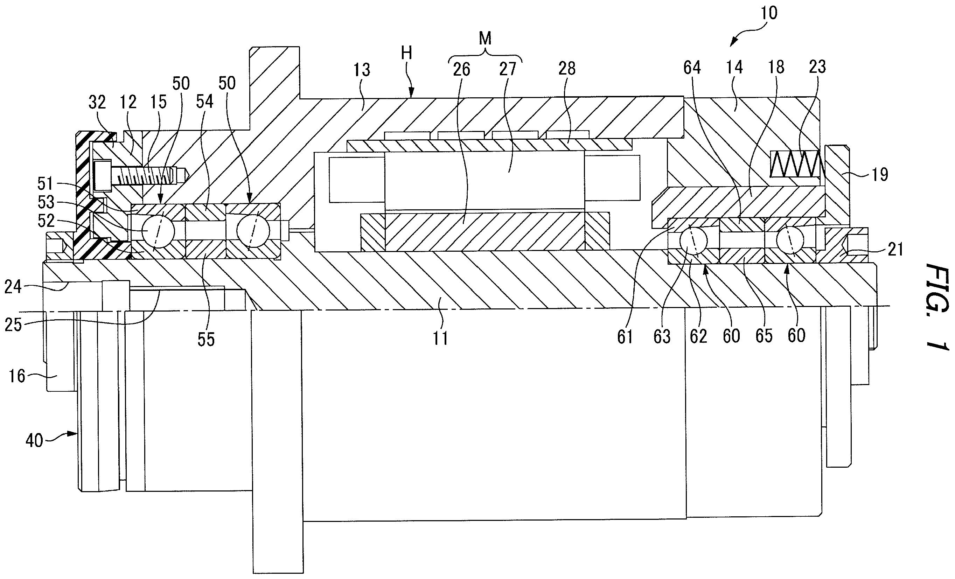

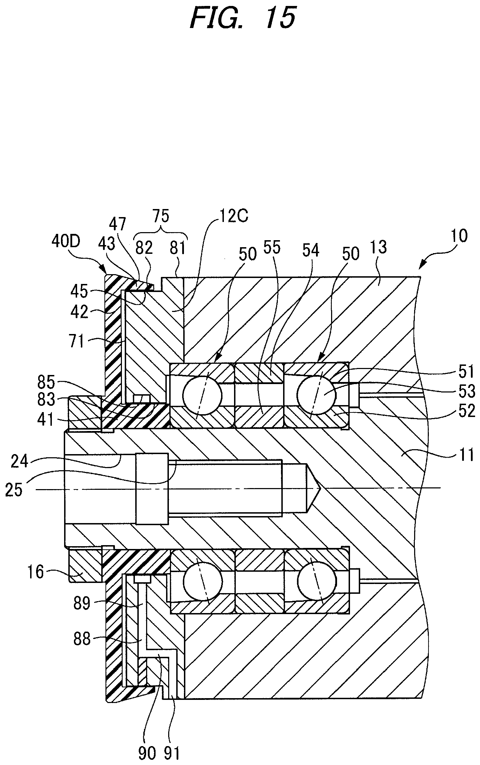

   Figures 1-4, 7, 8, 11, 13, 15-20 and 22-27 show examples of a spindle apparatus which do not fall under the scope claimed by the present invention.

### Examples and Embodiments of the Invention

Hereinafter, Examples of a spindle apparatus and embodiments of a spindle apparatus according to the present invention will be described in detail with reference to the drawings.

### First Example

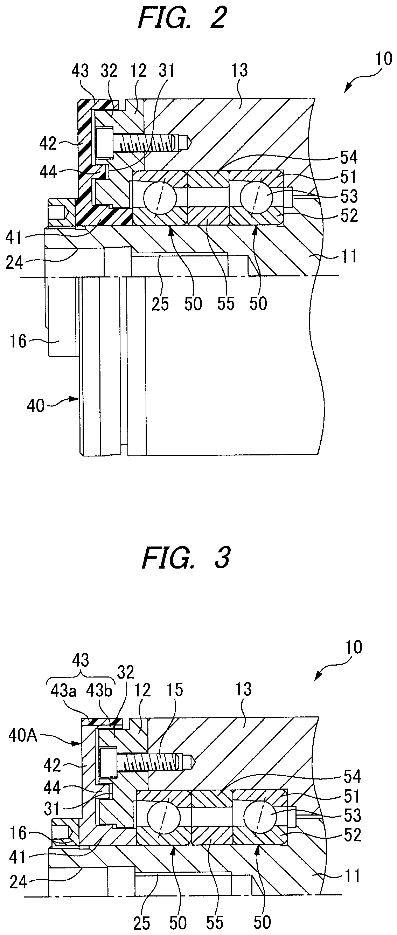

As shown in Figs. 1 and 2, a spindle apparatus 10 according to a first Example is a built-in motor type spindle apparatus for machine tools, in which a rotary shaft 11 is rotatably supported in a housing H by two rows of front bearings 50, 50 for bearing a tool side (front side) thereof and two rows of rear bearings 60, 60 for bearing a tool opposite side (rear side) thereof. The housing H includes a front bearing outer ring retainer 12, an outer cylinder 13 and a rear housing 14 in this order from the tool side.

Each of the front bearings 50 is an angular ball bearing, which includes an outer ring 51, an inner ring 52, balls 53 as rolling bodies arranged with a contact angle and a cage (not shown), and each of rear bearings 60 is an angular ball bearing, which includes an outer ring 61, an inner ring 62, balls 63 as rolling bodies and a cage (not shown). The front bearings 50, 50 (a tandem arrangement) and the rear bearings 60, 60 (a tandem arrangement) are provided to form a back-to-back arrangement in cooperation with each other.

The outer rings 51, 51 of the front bearings 50, 50 are fitted inside the outer cylinder 13, and are axially positioned and fixed relative to the outer cylinder 13 by the front bearing outer ring retainer 12, which is fastened to the outer cylinder 13 by a bolt 15, while interposing an outer ring spacer 54 therebetween.

Also, the inner rings 52, 52 of the front bearings 50, 50 are fitted outside the rotary shaft 11, and are axially positioned and fixed relative to the rotary shaft 11 by a nut 16 fastened to the rotary shaft 11, while interposing a flinger 40, which is a rotating member, and an inner ring spacer 55 therebetween.

The flinger 40 is fitted outside the rotary shaft 11 on the more tool side (the left side in the figures) than the front bearings 50, 50, and together with the inner rings 52, 52, is fixed to the rotary shaft 11 by the nut 16.

The outer rings 61, 61 of the rear bearings 60, 60 are fitted inside a sleeve 18, which is axially slidably fitted in the rear housing 14, and are axially positioned and fixed relative to the sleeve 18 by a rear bearing outer ring retainer 19, which is integrally fixed to the sleeve 18 by a bolt (not shown), while interposing an outer ring spacer 64 therebetween.

The inner rings 62, 62 of the rear bearings 60, 60 are fitted outside the rotary shaft 11, and are axially positioned and fixed relative to the rotary shaft 11 by another nut 21 fastened to the rotary shaft 11, while interposing an inner ring spacer 65 therebetween. A coil spring 23 is provided between the rear housing 14 and the rear bearing outer ring retainer 19, and a spring force of the coil spring 23 presses the rear bearing outer ring retainer 19 together with the sleeve 18 rearward. Thus, a preload is exerted on the rear bearings 60, 60.

The rotary shaft 11 is provided, on the tool side thereof, with a tool attaching hole 24 and a female thread 25, which are axially formed through an axial center thereof. The tool attaching hole 24 and the female thread 25 are used to attach a tool (not shown), such as a cutting tool, to the rotary shaft 11. Alternatively, instead of the female thread 25, a tap may be provided and the tool may be fixed by the tap. Also, instead of the tool attaching hole 24 and the female thread 25, a conventionally known drawbar (not shown) may be slidably inserted and fitted in the axial center of the rotary shaft 11. The drawbar may have a collet section for fixing a tool holder, and is urged in a direction toward the tool opposite side by a force of a disk spring (all not shown).

At an axially central portion of the rotary shaft 11 between the front bearings 50, 50 and the rear bearings 60, 60, a rotor 26 disposed to be integrally rotated with the rotary shaft 11 and a stator 27 disposed around the rotor 26 are provided. The stator 27 is fixed to the outer cylinder 13 by fitting a cooling jacket 28, which is shrinkage-fitted on the stator 27, in the outer cylinder 13 of the housing H. The rotor 26 and the stator 27 form a motor M, and by supplying electric power to the stator 27, a rotation force is generated on the rotor 26 to rotate the rotary shaft 11.

The flinger 40 has a boss portion 41 fitted outside the rotary shaft 11, a disk portion 42 extending radially outward from the boss portion 41, and an annular portion 43 extending rearward (a direction toward the front bearing outer ring retainer 12) from an outer peripheral portion of the disk portion 42 in a ring shape. On a surface of the radial middle of the disk portion 42, which is opposed to the front bearing outer ring retainer 12, a protrusion 44 protruding toward the front bearing outer ring retainer 12 is formed.

On a surface of the front bearing outer ring retainer 12, which is opposed to the flinger 40, a recess 31 opposing the protrusion 44 of the flinger 40 and capable of receiving the protrusion 44 with a slight gap therebetween is formed. Also, a small diameter portion 32 is formed on an outer peripheral front end side of the front bearing outer ring retainer 12.

The flinger 40 is disposed to be opposed the front bearing outer ring retainer 12 with slight axial and radial gaps therebetween, thereby forming a so-called labyrinth seal. More specifically, the protrusion 44 of the flinger 40 is received in the recess 31 of the front bearing outer ring retainer 12 with interposing the slight gap, and also the ring-shaped annular portion 43 is disposed to cover an outer surface of the small diameter 32 with interposing therebetween a slight radial gap, for example, a gap of about 0.5 mm.

In particular, an air curtain is formed between the annular portion 43 and the small diameter portion 32 due to a difference in peripheral speed thereof, thereby forming a waterproof mechanism that prevents machining liquid, which falls on the spindle apparatus 10 when a workpiece is machined, from entering the front bearings 50, 50.

The flinger 40 is formed of a carbon fiber composite material (CFRP), which has a high tensile strength and a small specific gravity as compared with a metal.

Specifically, the carbon fiber composite material is fabricated by superimposing a plurality of layers of sheets, which are obtained by impregnating a thermal setting resin, such as epoxy resin, containing a curing agent, to a knitting knitted in parallel with yarns made of carbon fiber using, for example, PAN (polyacrylonitrile) as a main material or a woven fabric (sheet shape) formed by yarns made of the carbon fiber, winding the superimposed sheets on a core bar or the like, and then heating and curing the sheets. Also, a carbon fiber using a pitch-based material as a main material may be employed. Material property values, such as a tensile strength, a tensile modulus and a linear expansion coefficient, of the carbon fiber composite material can be optimized to be suitable for a use by optimizing a fiber direction/angle.

If carbon fibers using as a main material a PAN-based material, which has material property values including, for example, a tensing strength of 1800 to 3500 MPa, a tensile modulus of 130 to 280 GPa and a specific gravity of 1.5 to 2.0 g/cc, are employed, a tensile strength as properties of the carbon fiber composite material is equal or larger as compared with conventional high tensile steels or the like, and a specific gravity thereof is about 1/5 (a specific strength thereof is about three times as compared with typical metal materials). Also, a thermal expansion coefficient can become -5×10⁻⁶K⁻¹ to +12×10⁻⁶K⁻¹ by optimizing a fiber direction/angle, and thus can be 1 to 1/10 as compared with conventional carbon steels.

In this way, by using the carbon fiber composite material having a small specific gravity as compared with a metal, centrifugal force exerted on the flinger 40 can be significantly reduced if diameter is the same, thereby eliminating a risk that the flinger 40 is damaged due to centrifugal force during high-speed rotation. In addition, because the tensile strength is equal or larger as compared with a metal, deformation due to the centrifugal force can be also suppressed. Therefore, a restriction on a rotation speed of the rotary shaft 11 or a restriction on a size (in a radial direction) of the flinger 40 can be significantly relaxed.

Therefore, a higher rotation speed or an increased size of the flinger 40, which has not previously been achieved, can be achieved, and thus centrifugal force exerted on the machining liquid can be increased so that the machining liquid to be fallen thereon can be securely radially outwardly blown out, thereby preventing the machining liquid from entering the bearing. Also, because centrifugal force exerted on the annular portion 43 of the flinger 40 is decreased, it is possible to prevent an opening side (the right side in the figures) of the annular portion 43, which is a cantilever structure having a relatively low strength, from being radially outwardly enlarged in diameter. Thus, a radial length and an axial length of the annular portion 43 can be set to be long, so that a length of the labyrinth seal can become longer, thereby enhancing a waterproof effect.

Fitting between the flinger 40 and the rotary shaft 11 is preferably done with a clearance fit of, for example, about few µm, taking into account a difference in linear expansion coefficient between a metal and the carbon fiber composite material and in this case an interference fit can be obtained due to expansion of the rotary shaft 11 during high-speed rotation. Also, considering a difference in linear expansion coefficient between the flinger 40 and the front bearing outer ring retainer 12, a gap between both is set to a gap (for example, ϕ 0.5 mm or less as a radial clearance) of an extent that does not cause an occurrence of interference even if the rotary shaft 11 and the front bearing outer ring retainer 12, which are made of a metal, are thermally expanded.

As described above, according to the spindle apparatus 10 of the present Example, at least a portion of the flinger 40, which is fixed to the rotary shaft 11 in an integrally rotatable manner and forming a portion of a waterproof mechanism that prevents machining liquid from entering the front bearings 50, 50, is formed of the carbon fiber composite material, and therefore a mass thereof is smaller as compared with a metal, so that centrifugal force is decreased if rotation speed is the same, thereby reducing an influence of the centrifugal force on the flinger 40. In addition, because the tensile strength is higher as compared with a metal, deformation due to the centrifugal force is further suppressed. Thus, the rotary shaft 11 can be rotated at a higher speed, namely can be used even when a dmn value of the bearings is 1 million or larger, more preferably 1.5 million or larger, and also, a restriction on a size of the flinger 40 can be significantly relaxed so that a radial length thereof can be increased and thus a lengthened labyrinth can be obtained, thereby achieving a good waterproof performance.

In addition, because the flinger 40 is arranged to be opposed to the front bearing outer ring retainer 12 of the housing H, with a slight gap therebetween, the flinger 40 and the front bearing outer ring retainer 12 can form a labyrinth seal, which is a non-contact seal, and therefore, machining liquid can be prevented from entering the front bearings 50, 50 in a stable manner for a long time.

### Modified Example 1

The flinger 40 may be formed of a material having a large specific elastic modulus as compared with the rotary shaft 11, not limited to the carbon fiber composite material. As used herein, the term 'specific elastic modulus' means a value obtained by dividing a longitudinal elastic modulus by a density (Specific elastic modulus = E (Longitudinal elastic modulus: kgf/m²) /p(Density: kg/m³)).

For example, when the rotary shaft 11 is formed of a metal, such as SC, SCM, SUS, AL, or CU material, a specific elastic modulus thereof is 1.4×10⁶m to 2.7×10⁶m, but the flinger 40 is formed of a material having a larger specific elastic modulus than that. The specific elastic modulus of the flinger 40 is good if larger than the specific elastic modulus of the rotary shaft 11, but preferably 5×10⁶m or larger, more preferably 8×10⁶m or larger. On the other hand, considering an imbalance in stress between the flinger 40 and the rotary shaft 11, which is fitted therein, the upper limit is preferably 20×10⁶m or smaller in practical use. If a material has a large specific elastic modulus, this means that the material is light and difficult to be deformed. The rotary shaft 11 and the flinger 40 may be respectively formed of metals each having a different specific elastic modulus and at least either one may be formed of a material other than metals.

In this way, by setting the specific elastic modulus of the flinger 40 to be larger than the specific elastic modulus of the rotary shaft 11, expansion of the flinger 40 due to centrifugal force is smaller as compared with the rotary shaft 11. Namely, during rotation, the rotary shaft 11 is radially more expanded, thereby reducing a radial gap in the fitting portion or becoming an interference fit. Thus, during high-speed rotation, deformation or damage due to centrifugal force can be suppressed and also even if a centrifugal expansion of the rotary shaft 11 is occurred, the centrifugal expansion is suppressed by the flinger 40, thereby preventing occurrences of problems, such as increase of the radial gap in the fitting portion relative to during stop.

For example, if fitting between the rotary shaft 11 and the flinger 40 is done with a clearance fit of about few µm, in this case an interference fit can be obtained due to expansion of the rotary shaft 11 during high-speed rotation, and thus the larger the centrifugal force is, the firmer the fitting between the rotary shaft 11 and the flinger 40 will become.

In addition, considering reduction of the radial gap during rotation, the radial gap upon assembly may be set to be larger if necessary. Therefore, the flinger 40 can be easily assembled to the rotary shaft 11.

Also, in addition to setting the specific elastic modulus of the flinger 40 to be larger than the specific elastic modulus of the rotary shaft 11, a linear expansion coefficient of the flinger 40 is preferably set to be smaller than a linear expansion coefficient of the rotary shaft 11.

For example, when the rotary shaft 11 is formed of a metal, such as SC, SCM, SUS, AL, or CU material, a linear expansion coefficient thereof is +10×10⁻⁶K⁻¹ to +24×10⁻⁶K⁻¹, but the flinger 40 is preferably formed of a material having a smaller linear expansion coefficient than that. The linear expansion coefficient of the flinger 40 is preferably -5×10⁻⁶K⁻¹ to +10×10⁻⁶K⁻¹.

In this way, by setting the linear expansion coefficient of the flinger 40 to be smaller than the linear expansion coefficient of the rotary shaft 11, even if a thermal expansion of the rotary shaft 11 is occurred by an elevated temperature due to influences, such as a heat generated by the front bearings 50, 50, the motor M or the like, the thermal expansion is suppressed by the flinger 40, thereby preventing occurrences of problems, such as increase of the radial gap in the fitting portion relative to during stop.

Examples of a material having a larger specific elastic modulus and a smaller linear expansion coefficient than the rotary shaft 11 typically formed of a metal include a carbon fiber composite material (CFRP). The details of the carbon fiber composite material (CFRP) are identical to those of the first Example, and accordingly the description thereof will be omitted.

As described above, according to the spindle apparatus 10 of the present Example, the specific elastic coefficient of the flinger 40 fitted outside the rotary shaft 11 and forming a portion of a waterproof mechanism that prevents machining liquid from entering the front bearings 50, 50 is larger than the specific elastic coefficient of the rotary shaft 11, and thus expansion of the flinger 40 due to centrifugal force is smaller as compared with the rotary shaft 11. Thus, during high-speed rotation, deformation or damage due to centrifugal force can be suppressed and also even if a centrifugal expansion of the rotary shaft 11 is occurred, the centrifugal expansion is suppressed by the flinger 40, thereby preventing occurrences of problems, such as increase of the radial gap in the fitting portion relative to during stop. On the other hand, it is not necessary to set the whole of the flinger 40 to have a larger specific elastic modulus than that of the rotary shaft 11, and accordingly, it is sufficient if at least a part thereof is set to have a larger specific elastic modulus than that of the rotary shaft 11. An example of this case will be described below.

Also, in addition to setting the specific elastic modulus of the flinger 40 to be larger than the specific elastic modulus of the rotary shaft 11, by setting the linear expansion coefficient of the flinger 40 to be smaller than the linear expansion coefficient of the rotary shaft 11, even if a thermal expansion of the rotary shaft 11 is occurred by an elevated temperature, the thermal expansion is suppressed by the flinger 40, thereby preventing occurrences of problems, such as increase of the radial gap in the fitting portion relative to during stop.

In addition, by forming the flinger 40 by the carbon fiber composite material, a mass thereof is smaller as compared with a metal, so that centrifugal force is decreased if rotation speed is the same, thereby reducing an influence of the centrifugal force on the flinger 40. In addition, because the tensile strength is higher as compared with a metal, deformation due to the centrifugal force is further suppressed. Thus, the rotary shaft 11 can be rotated at a higher speed, namely can be used even when a dmn value of the bearings is 1 million or larger, more preferably 1.5 million or larger, and also, a restriction on a size of the flinger 40 can be significantly relaxed so that a radial length thereof can be increased and thus a lengthened labyrinth can be obtained, thereby achieving a good waterproof performance.

### Second Example

Next, a second Example of a spindle apparatus will be described with reference to Fig. 3. Fig. 3 is a sectional view of a main portion of the spindle apparatus according to the second Example, which is different from the first Example in the configuration of the flinger. The other portions are the same as those of the spindle apparatus according to the first Example, and accordingly, the same portions are designated by the same or similar reference numerals and the description thereof will be simplified or omitted.

A flinger 40A of the spindle apparatus 10 of the present Example includes an annular portion 43, a radially outer annular portion 43a including an outer peripheral surface of the annular portion 43, and a radially inner annular portion 43b located on a radially inner side of the radially outer annular portion 43a. The radially outer annular portion 43a and the radially inner annular portion 43b are formed of different materials, i.e., the radially outer annular portion 43a is formed of a carbon fiber composite material and the radially inner annular portion 43b is mainly formed of a metal material, such as SC, SCM, SUS, AL, or CU material, integrally with a boss portion 41 and a disk portion 42.

In this way, centrifugal force can be suppressed by forming the radially outer annular portion 43a, on which the largest centrifugal force is to be generated, by the carbon fiber composite material, and also, expansion of the radially inner annular portion 43b is suppressed by the carbon fiber composite material having a high mechanical strength, thereby preventing deformation or damage of the flinger 40A during high-speed rotation.

As a method of fixing the radially inner annular portion 43b formed of the metal material to the radially outer annular portion 43a formed of the carbon fiber composite material, a method, such as integral molding, insert molding or adhesive fixing, can be employed. Alternatively, freeze fit can be employed, in which the radially outer annular portion 43a having a ring shape is fitted in the cooled radially inner annular portion 43b. In the case of freeze fit, for example, even with a small interference fit of about 0.005 mm, a large centrifugal force is exerted on the radially inner annular portion 43b formed of the metal material due to a difference in specific gravity during rotation, and thus the interference is increased, thereby providing a secure fixation.

In addition, because a main portion of the flinger 40A, except the radially outer annular portion 43a which is the outmost peripheral part, is formed of a metal, complex shape machining and high precision machining can be easily obtained, and as compared with the flinger 40 entirely formed of the carbon fiber composite material, a gap between the flinger 40A and a front bearing outer ring retainer 12 can be decreased. Also, because the boss portion 41 of the flinger 40A, which axially fixes the inner rings 52, 52 by a nut 16, is made of a metal, similarly to a rotary shaft 11, the nut 16, the inner rings 52, 52, and an inner ring spacer 55, differences of elongated amounts thereof due to differences in linear expansion coefficient are small, and thus an axial fixation force on the inner rings 52, 52 is hardly changed.

According to the spindle apparatus 10 of the present Example, the annular portion 43 of the flinger 40A includes two members, namely the radially inner annular portion 43b made of a metal and arranged on the radially inner side, and the radially outer annular portion 43a made of the carbon fiber composite material and arranged on the radially outer side of the radially inner annular portion 43b, and therefore, centrifugal force to be generated can be suppressed and also expansion of the radially inner annular portion 43b can be suppressed by the radially outer annular portion 43a, thereby preventing deformation or damage of the flinger 40A during high-speed rotation.

### Modified Example 2

The radially outer annular portion 43a may be formed of a material having a large specific elastic modulus as compared with the radially inner annular portion 43b, not limited to the carbon fiber composite material. When the radially inner annular portion 43b is formed of a metal, such as SC, SCM, SUS, AL, or CU material, a specific elastic modulus thereof is 1.4×10⁶m to 2.7×10⁶m, but the radially outer annular portion 43a is formed of a material having a larger specific elastic modulus than that. The specific elastic modulus of the radially outer annular portion 43a is good if larger than the specific elastic modulus of the rotary shaft 11, but preferably 5×10⁶m or larger, more preferably 8×10⁶m or larger. On the other hand, considering an imbalance in stress between the radially outer annular portion 43a and the radially inner annular portion 43b, which is fitted therein, the upper limit is preferably 20×10⁶m or smaller in practical use. The radially outer annular portion 43a and the radially inner annular portion 43b may be respectively formed of metals each having a different specific elastic modulus, and at least either one may be formed of a material other than metals.

In this way, by setting the specific elastic modulus of the radially outer annular portion 43a to be larger than the specific elastic modulus of the radially inner annular portion 43b, expansion of the radially outer annular portion 43a due to centrifugal force is smaller as compared with the radially inner annular portion 43b. Namely, during rotation, the radially inner annular portion 43b is radially more expanded, thereby reducing a radial gap in the fitting portion or becoming an interference fit. Thus, during high-speed rotation, deformation or damage due to centrifugal force can be suppressed and also even if a centrifugal expansion of the radially inner annular portion 43b is occurred, the centrifugal expansion is suppressed by the radially outer annular portion 43a, thereby preventing occurrences of problems, such as increase of the radial gap in the fitting portion relative to during stop.

As a method of fixing the radially inner annular portion 43b to the radially outer annular portion 43a, a method, such as integral molding or insert molding, can be employed. Alternatively, freeze fit can be employed, in which the radially outer annular portion 43a having a ring shape is fitted in the cooled radially inner annular portion 43b. In the case of freeze fit, for example, even with a small interference fit of about 0.005 mm, a large centrifugal force is exerted on the radially inner annular portion 43b formed of the metal material due to a difference in specific gravity during rotation, and thus the interference is increased, thereby providing a secure fixation. Therefore, in addition to a problem due to an occurrence of a radial gap in the fitting portion between the radially inner annular portion 43a and the radially outer annular portion 43a, expansion of the radially inner annular portion 43b can be suppressed by fitting the radially outer annular portion 43a outside the radially inner annular portion 43b, and as a result, increase of a radial gap in a fitting portion of the rotary shaft 11, which is fitted inside the radially inner annular portion 43b can be further suppressed.

Also, in addition to setting the specific elastic modulus of the radially outer annular portion 43a to be larger than the specific elastic modulus of the radially inner annular portion 43b, a linear expansion coefficient of the radially outer annular portion 43a is preferably set to be smaller than a linear expansion coefficient of the radially inner annular portion 43b.

For example, when the radially inner annular portion 43b is formed of a metal, such as SC, SCM, SUS, AL, or CU material, a linear expansion coefficient thereof is +10×10⁻⁶K⁻¹ to +24×10⁻⁶K⁻¹, but the radially outer annular portion 43a is preferably formed of a material having a smaller linear expansion coefficient than that. The linear expansion coefficient of the radially outer annular portion 43a is preferably -5×10⁻⁶K¹ to +10×10⁻⁶K⁻¹.

In this way, by setting the linear expansion coefficient of the radially outer annular portion 43a to be smaller than the linear expansion coefficient of the radially inner annular portion 43b, even if a thermal expansion of the radially inner annular portion 43b is occurred by an elevated temperature due to influences, such as a heat generated by the front bearings 50, 50, the motor M or the like, the thermal expansion is suppressed by the radially outer annular portion 43a, thereby preventing occurrences of problems, such as increase of the radial gap in the fitting portion relative to during stop.

As a preferable example, it is conceived that the radially inner annular portion 43b is formed of a metal and the radially outer annular portion 43a is formed of a carbon fiber composite material (CFRP) having a larger specific elastic modulus and a smaller linear expansion coefficient than those of the radially inner annular portion 43b. The details of the carbon fiber composite material (CFRP) are identical to those of the modified example 1 of the first Example, and accordingly the description thereof will be omitted.

According to the spindle apparatus 10 of the present modified example configured in this way, because the annular portion 43 of the flinger 40A includes two members, namely the radially inner annular portion 43b and the radially outer annular portion 43a fitted outside the radially inner annular portion 43b, and the radially outer annular portion 43b has a larger specific elastic modulus than that of the radially inner annular portion 43b, expansion of the radially outer annular portion 43a due to centrifugal force is smaller as compared with the radially outer annular portion 43a. Thus, during high-speed rotation, deformation or damage due to centrifugal force can be suppressed and also even if a centrifugal expansion of the radially inner annular portion 43b is occurred, the centrifugal expansion is suppressed by the radially outer annular portion 43a, thereby preventing occurrences of problems, such as increase of the radial gap in the fitting portion relative to during stop.

Further, because a main portion of the flinger 40A, except the radially outer annular portion 43a which is the outmost peripheral part, is formed of a metal, complex shape machining and high precision machining can be easily obtained, and as compared with the flinger 40 entirely formed of the carbon fiber composite material, a gap between the flinger 40A and the front bearing outer ring retainer 12 can be decreased. Also, because the boss portion 41 of the flinger 40A, which axially fixes the inner rings 52, 52 by the nut 16, is made of a metal, similarly to the rotary shaft 11, the nut 16, the inner rings 52, 52, and the inner ring spacer 55, differences of elongated amounts thereof due to differences in linear expansion coefficient are small, and thus an axial fixation force on the inner rings 52, 52 is hardly changed.

### Third Example

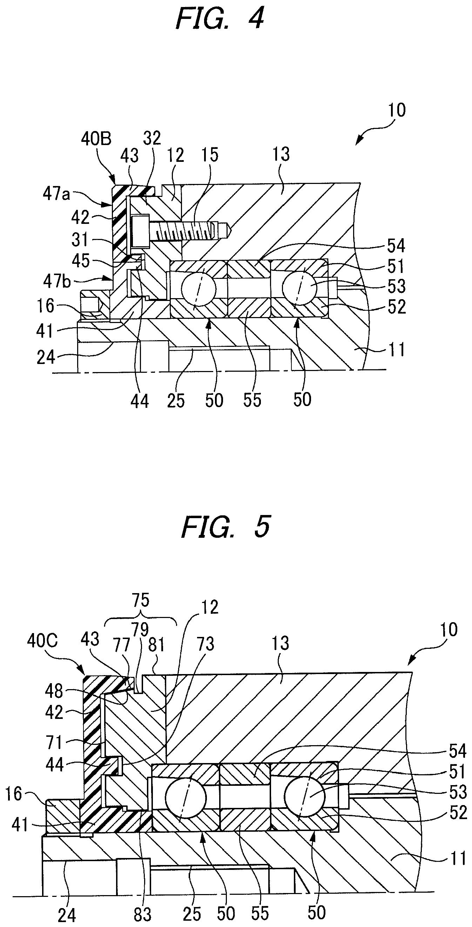

Next, a third Example of a spindle apparatus will be described. Fig. 4 is a sectional view of a main portion of the spindle apparatus according to the third Example, which is different from the first and second Examples in the configuration of the flinger. The other portions are the same as those of the spindle apparatus according to the first Example, and accordingly, the same portions are designated by the same or similar reference numerals and the description thereof will be simplified or omitted.

A flinger 40B of a spindle apparatus 10 of the present Example includes a radially outer flinger 47a arranged on the radially outer side of a central surface of a protrusion 44, and a radially inner flinger 47b arranged on the radially inner side of the central surface of the protrusion 44. The radially outer flinger 47a and the radially inner flinger 47b are formed of different materials, i.e., the radially outer flinger 47a is formed of a carbon fiber composite material and the radially inner annular portion 43b is mainly formed of a metal material, such as SC, SCM, SUS, AL, or CU material.

Thus, an interface 45 between the radially inner flinger 47b formed of the metal material and the radially outer flinger 47a formed of the carbon fiber composite material exists in the protrusion 44 of the disk portion 42.

Therefore, an outer diameter of the radially inner flinger 47b can be decreased to suppress centrifugal force, and also a bonding area between the radially inner flinger 47b formed of the metal material and the radially outer flinger 47a formed of the carbon fiber composite material can be increased to enhance a bonding strength. A method of fixing the radially inner annular portion 43b formed of the metal material to the radially outer annular portion 43a formed of the carbon fiber composite material, and maintaining of an axial fixation force on inner rings 52, 52 by a difference in linear expansion coefficient are the same as those in the spindle apparatus 10 of the second Example.

According to the spindle apparatus 10 of the present Example, the flinger 49B has the protrusion 44, which protrudes toward a front bearing outer ring retainer 12, on a surface thereof opposing the front bearing outer ring retainer 12, and the front bearing outer ring retainer 12 has a recess 31, which is adapted to receive the protrusion 44 with a slight gap therebetween, on a surface thereof opposed to the flinger 40B. The interface 45 between the radially inner flinger 47b formed of the metal material and the radially outer flinger 47a formed of the carbon fiber composite material is arranged in the protrusion 44 of the disk portion 42, and therefore the diameter of the radially inner flinger 47b is decreased, there reducing centrifugal force. Also, the bonding area between the radially inner flinger 47b and the radially outer flinger 47a is increased to enhance the bonding strength, thereby preventing damage of the flinger 40B due to centrifugal force.

On the other hand, the flinger 40B may be radially divided into three or more members, not limited to the case of being divided into two members. In this case, a member located at the outmost diameter part is formed of the carbon fiber composite material.

### Modified Example 3

The radially outer flinger 47a may be formed of a material having a large specific elastic modulus as compared with the radially inner flinger 47b, not limited to the carbon fiber composite material. This can correspond to a configuration in which an interface between the radially outer annular portion 43a and the radially inner annular portion 43b in the modified example 2 of the second Example is set in a generally middle surface of the protrusion 44. Therefore, operations and effects of the present modified example can be described by substituting the radially outer annular portion 43a in the modified example 2 of the second Example with the radially outer flinger 47a and substituting the radially inner annular portion 43b with the radially inner flinger 47b, and accordingly, the same operations/effects will be omitted herein.

Also, according to the spindle apparatus 10 of the present modified example, because a radial length of the radially outer flinger 47a is longer as compared with the spindle apparatus 10 according to the modified example 2 of the second Example, increase of the radial gap in the fitting portion of the rotary shaft 11 can be further suppressed. Further, by polishing portions forming a labyrinth and thus require an accuracy, in a post-process, an accuracy thereof corresponding to that of a metal can be obtained.

In addition, because the interface 45 between the radially inner flinger 47b and the radially outer flinger 47a is set in the protrusion 44 of the disk portion 42, the bonding area between the radially inner flinger 47b and the radially outer flinger 47a is increased to enhance the bonding strength, thereby preventing damage of the flinger 40B due to centrifugal force.

Also, in the present modified example, the flinger 40B may be radially divided into three or more members, not limited to the case of being divided into two members. In this case, a specific elastic modulus thereof is preferably increased as going radially outward, and particularly preferably, a member located at the outmost diameter part is formed of the carbon fiber composite material.

Although, in the foregoing Examples, the flinger has been described as having the annular portion at the outer peripheral part thereof, the flinger may not have the annular portion, in a case where the spindle apparatus is used as a vertical spindle apparatus, or the like. Also, although the spindle apparatus has been described as the built-in motor type spindle apparatus, the Examples may be applied in the same manner to a belt-driven type spindle apparatus or a motor direct connection type spindle apparatus, which is connected to a rotary shaft of a motor via a coupling. In addition, the invention is not limited to a spindle apparatus for machining tools, but may be applied to spindle apparatuses for other high-speed rotation equipment, which requires waterproof function.

### First Embodiment

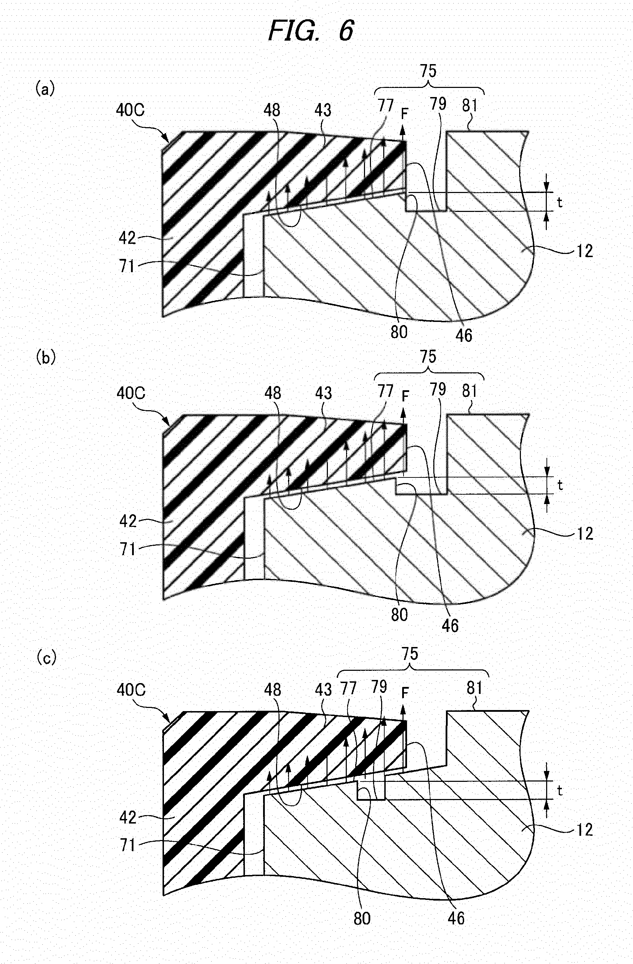

Next, a first embodiment of a spindle apparatus according to the present invention will be described. Figs. 5 and 6(a) are sectional views showing a main portion of the spindle apparatus according to the first embodiment of the invention and are different from the foregoing Examples in the configuration of the flinger. The other portions are the same as those of the spindle apparatus according to the first Example, and accordingly, the same portions are designated by the same or similar reference numerals and the description thereof will be simplified or omitted.

A flinger 40C of the present embodiment has a boss portion 41 fitted and fixed outside a rotary shaft 11 and thus serving as a base portion, a disk portion 42 extending radially outward from an axial front end of the boss portion 41, and an annular portion 43 extending axially rearward (a direction toward the front bearing outer ring retainer 12) from a radial outside end of the disk portion 42 in a ring shape. On a surface of the radial middle of the disk portion 42, which is opposed to the front bearing outer ring retainer 12, a protrusion 44 protruding toward the front bearing outer ring retainer 12 is formed. The annular portion 43 is formed in a tapered shape, a thickness of which is reduced along the axial direction away from the disk portion 41, i.e., along the axially rearward direction. More particularly, an inner peripheral surface 48 of the annular portion 43 is formed as a tapered surface, a radial dimension of which is increased along the axial direction away from the disk portion 42.

On an axial front surface 71 of the front bearing outer ring retainer 12, which is axially opposed to the disk portion 42 of the flinger 40C, a recess 73 opposing the protrusion 44 of the flinger 40C and capable of receiving the protrusion 44 with a slight gap therebetween is formed. Also, an outer peripheral surface 75 of the front bearing outer ring retainer 12 has a tapered portion 77 formed on an axial front end thereof and having a radial dimension that increases along the axially rearward direction, a circumferential groove 79 provided over the entire periphery thereof to be radially inwardly recessed from an axial rear end of the tapered portion 77 by a depth t, and a large-diameter cylindrical surface 81 extending radially outward and axially rearward from an axial rear end of the circumferential groove 79 to be smoothly connected to an outer peripheral surface of an outer cylinder 13.

The boss portion 41 is arranged to be radially opposed to an inner peripheral surface 83 of the front bearing outer ring retainer 12 with a slight gap therebetween, the disk portion 42 is arranged to be axially opposed to the axial front surface 71 of the front bearing outer ring retainer 12 with a slight gap therebetween, and the annular portion 43 is arranged to be radially opposed to the tapered portion 77 of the outer peripheral surface 75 of the front bearing outer ring retainer 12 with a slight gap therebetween. In this way, the flinger 40C is arranged to be opposed to the front bearing outer ring retainer 12 of a housing H, with slight axial and radial gaps therebetween, for example, gaps of about 0.5 mm, thereby forming a so-called labyrinth seal.

In particular, an air curtain is formed between the inner peripheral surface 48 of the annular portion 43 and the tapered portion 77 due to a difference in peripheral speed thereof, thereby forming a waterproof mechanism that prevents machining liquid, which falls on the spindle apparatus 10 when a workpiece is machined, from entering the front bearings 50, 50. Also, even if the machining liquid enters a labyrinth gap between the inner peripheral surface 48 of the annular portion 43 and the tapered portion 77, centrifugal force F generated in the machining liquid is increased along the axially rearward direction, so that the machining liquid can be guided by the inner peripheral surface 48 of the annular portion 43 to be discharged to the outside of the labyrinth. In addition, rotation speed of the inner peripheral surface 48 of the annular portion 43 increases along the axially rearward direction, and therefore, a pressure in the labyrinth gap between the inner peripheral surface 48 of the annular portion 43 and the tapered portion 77 is decreased along the axially rearward direction. Thus, an air flow toward an axially rearward direction is generated in the labyrinth gap between the inner peripheral surface 48 of the annular portion 43 and the tapered portion 77, thereby further preventing the machining liquid from entering therein by a so-called pump effect.

According to the present embodiment, because the tapered portion 77 of the outer peripheral surface 75 of the front bearing outer ring retainer 12, together with the inner peripheral surface 48 of the annular portion 43, forms the labyrinth, the machining liquid is guided by the tapered portion 77 during stop of the spindle to easily enter the labyrinth. However, an axial front end 80 of the circumferential groove 79 and an axial rear end surface 46 of the annular portion 43 are located in a common plane perpendicular to the rotary shaft 11, and thus even during stop of the spindle, the machining liquid can be guided by the circumferential groove 79 to be discharged to the outside, thereby preventing the machining liquid from entering the labyrinth gap between the inner peripheral surface 48 of the annular portion 43 and the tapered portion 77.

In addition, the circumferential groove 79 is not limited to the foregoing configuration as long as the axial front end 80 thereof overlaps the annular portion 43 with respect to the axial direction. For example, the circumferential groove 79 may be formed such that the axial front end 80 of the circumferential groove 79 is located axially forward than the axial rear end surface 46 of the annular portion 43 as shown in Fig. 6(b), or may be formed such that the entire circumferential groove 79 overlaps the annular portion 43 with respect to the axial direction as shown in Fig. 6(c).

To effectively achieve the waterproof function of the spindle apparatus 10 of the preset invention, the spindle apparatus 10 is preferably used in a horizontal direction (a state where an axial direction thereof is perpendicular to a gravity direction). In the case having such a configuration, it is possible to allow machining liquid gathered in the circumferential groove 79 to be efficiently discharged to the outside of the spindle apparatus 10 by gravity, in addition to making it difficult for the polishing liquid to enter the labyrinth gap between the outer peripheral surface 75 of the front bearing outer ring retainer 12 and the inner peripheral surface 48 of the annular portion 43.

In addition, the flinger 40C of the present invention is formed of a carbon fiber composite material (CFRP), which has a high tensile strength and a small specific gravity as compared with a metal. The details of the carbon fiber composite material (CFRP) are identical to those of the first Example, and accordingly the description thereof will be omitted.

As described above, according to the spindle apparatus 10 of the present embodiment, the annular portion 43 of the flinger 40C, which is arranged to be opposed to the outer peripheral surface 75 of the front bearing outer ring retainer 12 of the housing H, is formed in a tapered shape, a thickness of which is reduced along the axially rearward direction. Thus, deformation due to centrifugal force is hardly occurred on the distal end side of the annular portion 43 to suppress increase of a gap at an entrance of the labyrinth, thereby achieving a good waterproof function. Even if the annular portion 43 is formed at a constant thickness, deformation of the front end side due to centrifugal force is easily increased, so that the labyrinth is opened near the entrance and thus the machining liquid can enter therein.

Also, because the inner peripheral surface 48 of the annular portion 43 is formed as a tapered surface having a radial dimension that increases along the axially rearward direction, even if machining liquid enters the labyrinth gap between the inner peripheral surface 48 of the annular portion 43 and the tapered portion 77, centrifugal force F generated in the machining liquid is increased along the axially rearward direction, so that the machining liquid can be guided by the inner peripheral surface 48 of the annular portion 43 to be discharged to the outside of the labyrinth. Further, because the rotation speed the peripheral surface 48 of the annular portion 43 increases along the axially rearward direction, a pressure in the labyrinth gap between the inner peripheral surface 48 of the annular portion 43 and the tapered portion 77 is decreased along the axially rearward direction. Thus, an air flow toward an axially rearward direction is generated in the labyrinth gap between the inner peripheral surface 48 of the annular portion 43 and the tapered portion 77, thereby further preventing the machining liquid from entering therein by a so-called pump effect.

Further, because the circumferential groove 79 provided in a recessed manner on the outer peripheral surface 75 of the front bearing outer ring retainer 12 of the housing H is configured such that the end portion (axial front end 80) thereof on the side of the disk portion 42 overlaps the annular portion 43 with respect to the axial direction, the machining liquid can be gathered in the circumferential groove 79 even during stop of the spindle, thereby preventing the machining liquid from entering the labyrinth gap between the inner peripheral surface 48 of the annular portion 43 and the tapered portion 77.

In addition, because the flinger 40C is formed of the carbon fiber composite material, a mass thereof is smaller as compared with a metal so that centrifugal force is decreased, and also a tensile strength thereof is higher as compared with a metal, thereby further suppressing deformation due to the centrifugal force. Thus, the flinger 40C can be used at a higher dmn value (bearing) and also can increase a radial length and an axial length thereof, so that the machining liquid can be strongly thrown off and also a lengthened labyrinth can be obtained, thereby achieving a good waterproof performance.

### Fourth Example

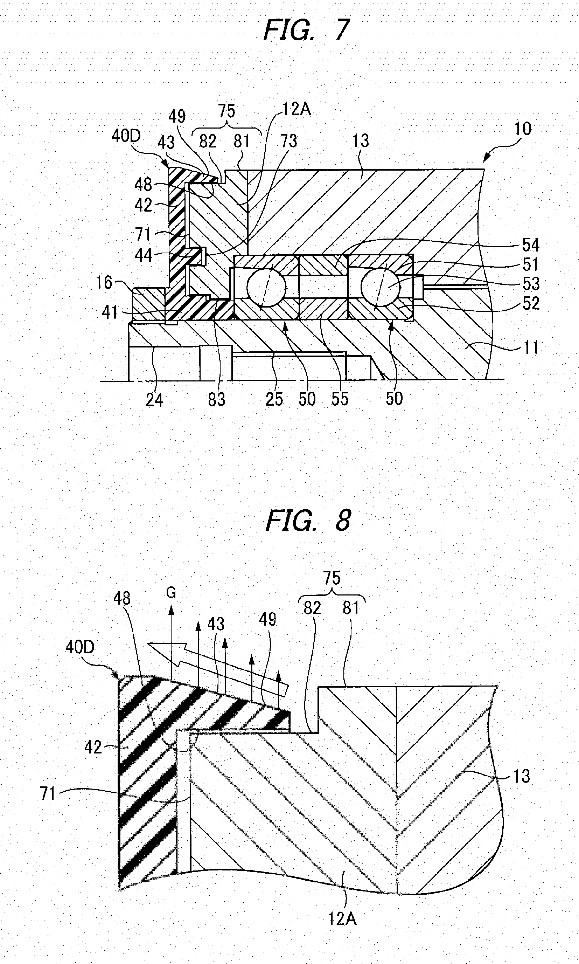

Next, a fourth Example will be described with reference to Figs. 7 and 8. The spindle apparatus according to the present Example is different from the first embodiment in the configurations of the flinger and the front bearing outer ring retainer. The other portions are the same as those of the spindle apparatus according to the first embodiment of the invention, and accordingly, the same portions are designated by the same or similar reference numerals and the description thereof will be simplified or omitted.

A front bearing outer ring retainer 12A of the present Example has an outer peripheral surface 74 including a small-diameter cylindrical surface 82 formed on the axially forward side thereof and a large-diameter cylindrical surface 81 formed on the axially rearward side, and has a generally L-shaped cross section. Also, an annular portion 43 of a flinger 40D has an inner peripheral surface 48, which is formed in a substantially cylindrical surface shape and is radially opposed to the small-diameter cylindrical surface 82 with a slight gap therebetween, and an outer peripheral surface 49 formed as a tapered surface such that a radial dimension thereof is decreased along the axially rearward direction.

Thus, according to the spindle apparatus 10 of the present Example, if machining liquid is adhered on the outer peripheral surface 40 of the annular portion 43, centrifugal force G generated in the machining liquid is decreased along the axially rearward direction. Therefore, the machining liquid can be guided by of the outer peripheral surface 49 of the annular portion 43, to be thrown off forward in an axial direction, i.e., a direction away from the housing H (a direction of an outline arrow in Fig. 8).

### Second Embodiment

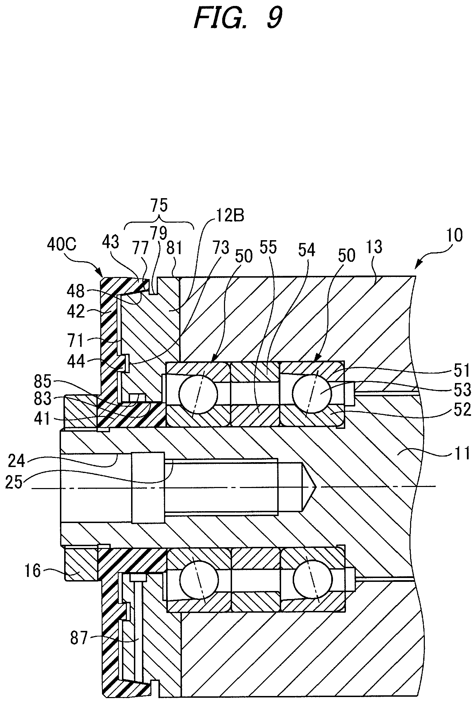

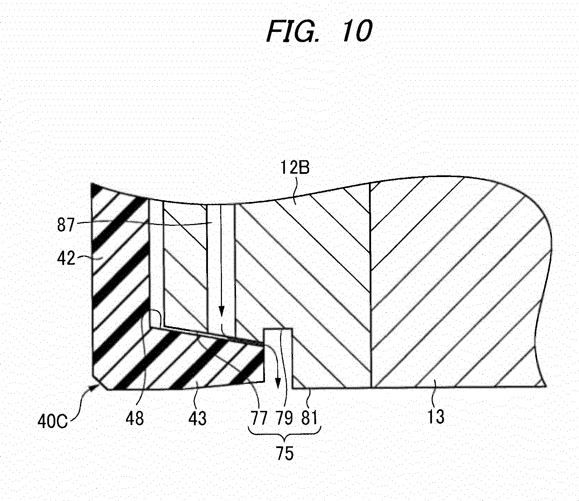

Next, a second embodiment of a spindle apparatus of the present invention will be described with reference to Figs. 9 and 10. The spindle apparatus according to the present embodiment is different from the first embodiment in the configuration of the front bearing outer ring retainer. The other portions are the same as those of the spindle apparatus according to the first Example, and accordingly, the same portions are designated by the same or similar reference numerals and the description thereof will be simplified or omitted.

A front bearing outer ring retainer 12B of the present embodiment has, on an inner peripheral surface 83 thereof radially opposing a boss portion 41 of a flinger 40C, an annular groove 85 provided to be radially outwardly recessed over the entire periphery thereof and a drain hole 87 as a communication hole communicating the annular groove 85 with a tapered portion 77 of an outer peripheral surface 75 thereof in a gravity direction toward a radial direction.

Thus, according to the spindle apparatus 10 of the present embodiment, even if polishing liquid enters between the boss portion 41 of the flinger 40C and the inner peripheral surface 83 of the front bearing outer ring retainer 12B, the polishing liquid is gathered in the annular groove 85 and discharged to a labyrinth gap between the inner peripheral surface 48 of the flinger 40C and the outer peripheral surface 75 of the front bearing outer ring retainer 12B through the drain hole 87. Then, the polishing liquid can be efficiently discharged to the outside by the pump effect or the centrifugal force as described above, thereby further preventing the polishing liquid from entering the front bearings 50.

### Fifth Example

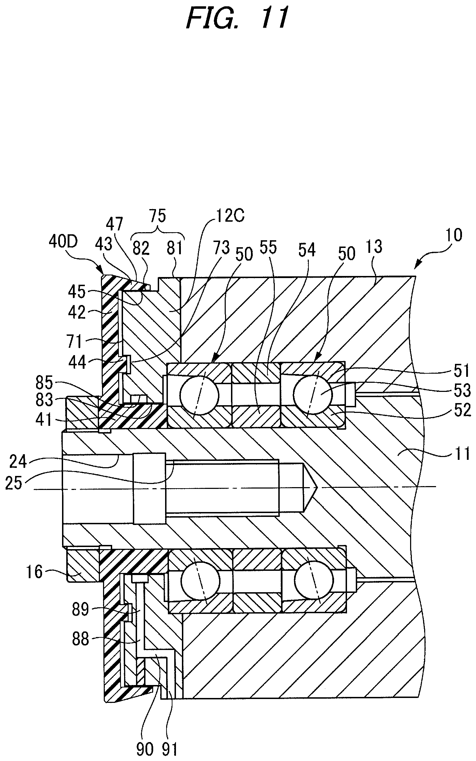

Next, a fifth Example will be described with reference to Fig. 11. The spindle apparatus according to the present Example is different from the fourth Example in the configuration of the front bearing outer ring retainer. The other portions are the same as those of the spindle apparatus according to the fourth Example, and accordingly, the same portions are designated by the same or similar reference numerals and the description thereof will be simplified or omitted.

A front bearing outer ring retainer 12C of the present Example has, on an inner peripheral surface 83 thereof radially opposing a boss portion 41 of a flinger 40D, an annular groove 85 provided to be radially outwardly recessed over the entire periphery thereof and a drain hole 88 for communicating the annular groove 85 with a large-diameter cylindrical surface 81 of an outer peripheral surface 75 thereof.

The drain hole 88 includes a first extension hole 89 extending radially outward from the annular groove 85, a second extension hole 90 extending axially rearward from a radial outside end of the first extension hole, and a third extension hole 91 extending radially outward from an axial rear end of the second extension hole 90 to be communicated with the large-diameter cylindrical surface 81.

As described above, according to the spindle apparatus 10 of the present Example, even if polishing liquid enters between the boss portion 41 of the flinger 40D and the inner peripheral surface 83 of the front bearing outer ring retainer 12C, the polishing liquid is gathered in the annular groove 85 and discharged to the outside through the drain hole 88, thereby further preventing the polishing liquid from entering the front bearings 50.

The present invention is not limited to the second embodiment described above, and changes and modifications may optionally be made therein. The flingers 40C, 40D may be at least partially formed of a carbon fiber composite material, and for example, the radially outer sides of the flingers 40C, 40D may formed of the carbon fiber composite material and the radially inner sides thereof may be formed of a metal, such as SC, SCM, SUS, AL, or CU material.

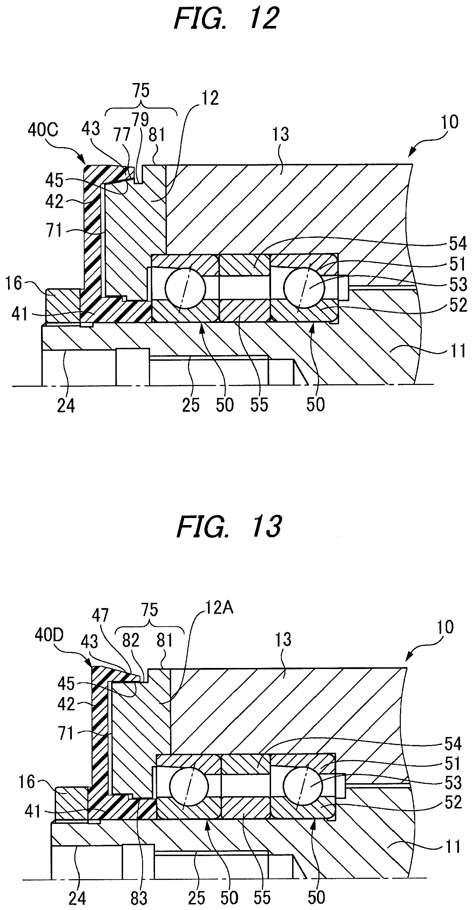

Also, as shown in Fig. 12, it is not necessary to provide the protrusion 44 on the disk portion 42 of the flingers 40C, 40D, and in this case, the recess 73 is not formed on the axial front end surface 71 of the front bearing outer ring retainers 12, 12A, 12B and 12C.

Of course, the inner peripheral surface 48 and the outer peripheral surface 49 of the annular portion 43 may be formed as tapered surfaces by combining the flinger 40C of the first embodiment with the flinger 40D of the fourth Example.

### Sixth Example

First, a spindle apparatus according to a sixth Example will be described. The spindle apparatus 110A of the present Example includes the same basic configurations as those of a conventional spindle apparatus 110 shown in Fig. 28, and accordingly, the same portions are designated by the same or similar reference numerals and the description thereof will be omitted.

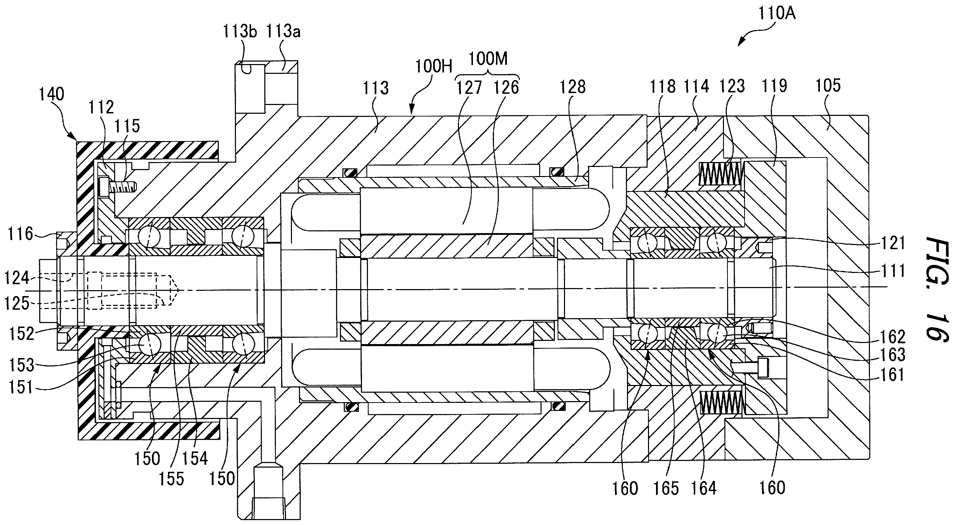

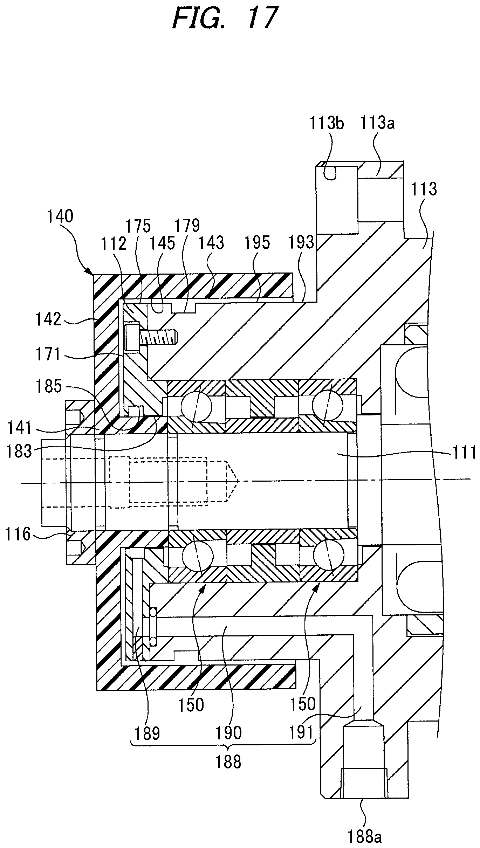

As shown in Figs. 16 and 17, a housing 100H of the spindle apparatus 110A of the present Example includes a front bearing outer ring retainer 112, an outer cylinder 113, a rear housing 114, and a rear lid 105 in this order from the tool side thereof.

Outer rings 151, 151 of the front bearings 150, 150 are fitted inside the outer cylinder 113, and are axially positioned and fixed relative to the outer cylinder 113 by the front bearing outer ring retainer 112, which is fastened to the outer cylinder 113 by a bolt 115, while interposing an outer ring spacer 154 therebetween.

Also, inner rings 152, 152 of the front bearings 150, 150 are fitted outside a rotary shaft 111, and are axially positioned and fixed relative to the rotary shaft 111 by a nut 116 fastened to the rotary shaft 111, while interposing a flinger 140 and an inner ring spacer 155 therebetween.

The flinger 140 is fitted outside the rotary shaft 11 on the more tool side (the left side in the figures) than the front bearings 150, 150, and together with the inner rings 152, 152, is fixed to the rotary shaft 111 by the nut 116.

The flinger 140 has a boss portion 141 fitted and fixed outside the rotary shaft 111 and thus serving as a base portion, a disk portion 142 extending radially outward from an axial front end of the boss portion 141, and an annular portion 143 extending axially rearward from a radial outside end of the disk portion 142 in a ring shape.

The boss portion 141 is arranged to be radially opposed to an inner peripheral surface 183 of the front bearing outer ring retainer 112 with a slight gap therebetween, the disk portion 142 is arranged to be axially opposed to an axial front surface 171 of the front bearing outer ring retainer 112 with a slight gap therebetween, and the annular portion 143 is arranged to be radially opposed to an outer peripheral surface 175 of the front bearing outer ring retainer 112 and an outer peripheral surface 193 of the outer cylinder 113, which is smoothly connected to the outer peripheral surface 175, with a slight gap therebetween. In this way, the flinger 140 is arranged to be opposed to the front bearing outer ring retainer 112 and the outer cylinder 113 of the housing 100H, with slight axial and radial gaps therebetween, for example, gaps of about 0.5 mm, thereby forming a so-called labyrinth seal.

In particular, an air curtain is formed between the inner peripheral surface 145 of the annular portion 143 and the outer peripheral surfaces 175 and 193 of the front bearing outer ring retainer 112 and the outer cylinder 113 due to a difference in peripheral speed thereof, thereby forming a waterproof mechanism that prevents machining liquid, which falls on the spindle apparatus 100A when a workpiece is machined, from entering the front bearings 150, 150.

In this case, on an opposing surface 195 of the outer peripheral surface 193 of the outer cylinder 113 that is radially opposed to the inner peripheral surface 145 of the annular portion 143, a circumferential groove 179 is provided to be radially inwardly recessed over the entire periphery thereof. Therefore, even if machining liquid enters a labyrinth gap, the machining liquid can be gathered in the circumferential groove 179, thereby preventing the machining liquid from entering the front bearings 150.

The front bearing outer ring retainer 112 has, on an inner peripheral surface 183 thereof radially opposing the boss portion 141 of the flinger 140, an annular groove 85 provided to be radially outwardly recessed over the entire periphery thereof, and a first extension hole 189 extending radially outward from the annular groove 185. Also, the outer cylinder 113 has a second extension hole 190 connected to and extending axially rearward from a radial outside end of the first extension hole 189, and a third extension hole 191 connected to and extending radially outward from an axial rear end of the second extension hole 190 to be communicated with an outer peripheral surface of a collar portion 113a. Also, these first, second and third extension holes 189, 190, 191form a drain hole 188 as a communication hole communicating the annular groove 185 with the outer peripheral surface of the collar 113a. Thus, even if polishing liquid enters between the boss portion 141 of the flinger 140 and the inner peripheral surface 183 of the front bearing outer ring retainer 112, the polishing liquid can be gathered in the annular groove 185 and discharged to the outside through the drain hole 188, thereby further preventing the polishing liquid from entering the front bearings 150.

To further acheive a waterproof performance, the spindle apparatus 110A of the preset Example is preferably used in a horizontal direction (a state where an axial direction thereof is perpendicular to a gravity direction) and also in such a manner that an opening 188a of the drain hole 188 provided in the collar 113a is oriented in a gravity direction. By using the spindle apparatus 110A in the horizontal direction, a polishing liquid is difficult to enter the labyrinth gap, and also by orientating the opening 188a of the drain hole 188, the polishing liquid can be further efficiently discharged from the labyrinth.

In addition, the flinger 140 of the present Example is formed of a carbon fiber composite material (CFRP), which has a high tensile strength and a small specific gravity as compared with a metal. The details of the carbon fiber composite material (CFRP) are identical to those of the first Example, and accordingly the description thereof will be omitted.

As described above, according to the spindle apparatus 110A of the present Example, even if machining liquid enters a labyrinth gap between the outer peripheral surfaces 175, 193 of the front bearing outer ring retainer 112 and the outer cylinder 113 of the housing H, and the annular portion 143 of the flinger 140, the machining liquid can be gathered in the circumferential groove 179 provided in the outer peripheral surface 193 of the outer cylinder 113, thereby preventing the machining liquid from entering the front bearings 150.

In addition, even if machining liquid enters the labyrinth gap, the machining liquid can be gathered in the annular groove 185 recessedly provided in the inner peripheral surface 183 of the front bearing outer ring retainer 112 and discharged to the outside through the drain hole 188, thereby further preventing the machining liquid from entering the front bearings 150.

In addition, because the flinger 140 is formed of the carbon fiber composite material, a mass thereof is smaller as compared with a metal so that centrifugal force is decreased, and also a tensile strength thereof is higher as compared with a metal, thereby further suppressing deformation due to the centrifugal force. Thus, the flinger 140 can be used at a higher dmn value (bearing) and also can increase a radial length and an axial length thereof, so that the machining liquid can be strongly thrown off and also a lengthened labyrinth can be obtained, thereby achieving a good waterproof performance.

### Seventh Example

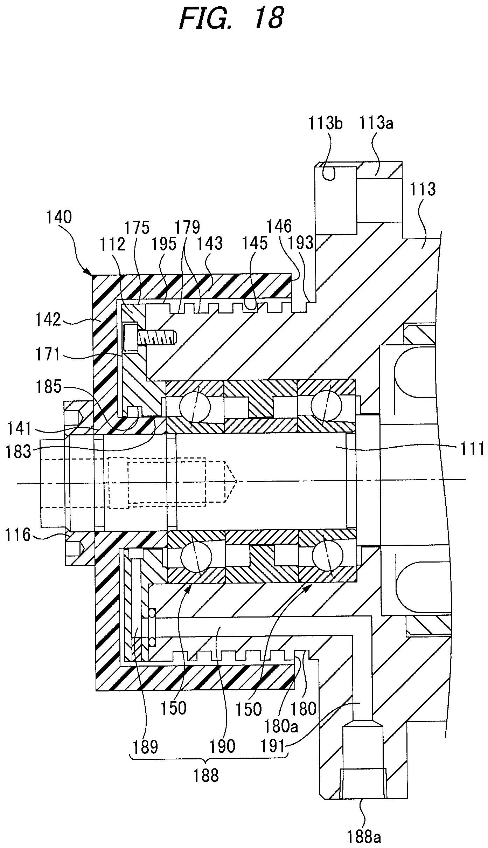

Next, a seventh Example will be described with reference to Fig. 18. The spindle apparatus according to the present Example is different from the sixth Example in the configuration of the outer cylinder. The other portions are the same as those of the spindle apparatus according to the sixth Example, and accordingly, the same portions are designated by the same or similar reference numerals and the description thereof will be simplified or omitted.

An outer cylinder 113 of the present Example is configured such that, on an opposing surface 195, which is radially opposed to an inner peripheral surface 145 of an annular portion 143, of an outer peripheral surface 193 thereof, a plurality of circumferential grooves 179, which are axially spaced from each other and are radially inwardly directed, are recessedly provided, thereby effectively preventing machining liquid from entering the front bearings 150.

In addition, at a location on the outer peripheral surface 193 of the outer cylinder 113, not radially opposed to the inner peripheral surface 145 of the annular portion 143 and located axially rearward from the circumferential grooves 179, a radially inwardly directed annular groove 180 is also provided in a recessed manner. An axial front end 180a of the annular groove 180 and an axial rear end surface 146 of the annular portion 143 are located in a common plane perpendicular to a rotary shaft 111. Thus, even during stop of the spindle, machining liquid can be guided by the annular groove 180 to be discharged to the outside, thereby preventing the machining liquid from entering a labyrinth gap.

### Eighth Example

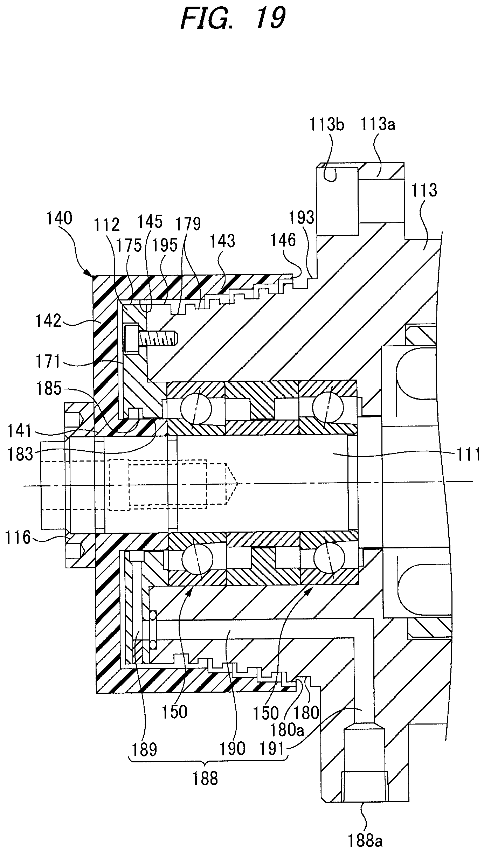

Next, an eighth Example will be described with reference to Fig. 19. The spindle apparatus according to the present Example is different from the seventh Example in the configurations of the front bearing outer ring retainer and the flinger. The other portions are the same as those of the spindle apparatus according to the seventh Example, and accordingly, the same portions are designated by the same or similar reference numerals and the description thereof will be simplified or omitted.

An outer cylinder 113 of the present Example is configured such that, on an opposing surface 195 of an outer peripheral surface 193 thereof, a plurality of circumferential grooves 179 are provided in a recessed manner and a radial distance from a rotary shaft 111 to the plurality of circumferential grooves 179 is increased along the axially rearward direction, i.e., in the axial direction away from a disk portion 142 of a flinger 140. A radial distance from the rotary shaft 111 to the annular groove 180 is larger than radial distance from the rotary shaft 111 to any of the circumferential grooves 179.

An annular portion 143 of the flinger 140 is formed in a substantially stepped shape, a radial distance of an inner peripheral surface 145 of which from the rotary shaft 111 is increased along the axially rearward direction. Alternatively, it is not necessary that the inner peripheral surface 143 is formed in a substantially stepped shape, and accordingly the inner peripheral surface 145 may have a tapered shape, a radial distance of which from the rotary shaft 11 is increased along the axially rearward direction.

As described above, according to the spindle apparatus 110A of the present Example, the radial distance from the rotary shaft 111 to the plurality of circumferential grooves 179 is increased along the axially rearward direction, and the radial distance from the rotary shaft 111 to the annular groove 180 is larger than the radial distance from the rotary shaft 111 to any of the circumferential grooves 179. Therefore, centrifugal force to be exerted on machining liquid adhered on the plurality of circumferential grooves 179 and the annular grooves 180 is increased along the axially rearward direction. Thus, even if machining liquid enters a labyrinth gap, an effect of discharging the machining liquid to the outside can be enhanced.

In addition, because the inner peripheral surface 145 of the annular portion 143 of the flinger 140 is formed in a tapered shape or a substantially stepped shape, in which a radial distance thereof from the rotary shaft 111 is increased along the axially rearward direction, centrifugal force to be exerted on machining liquid adhered on the inner peripheral surface 145 of the annular portion 143 of the flinger 140 is increased along the axially rearward direction. Thus, even if machining liquid enters a labyrinth gap, an effect of guiding the machining liquid by the inner peripheral surface 145 of the annular portion 143 and thus discharging the machining liquid to the outside can be enhanced.

### Ninth Example

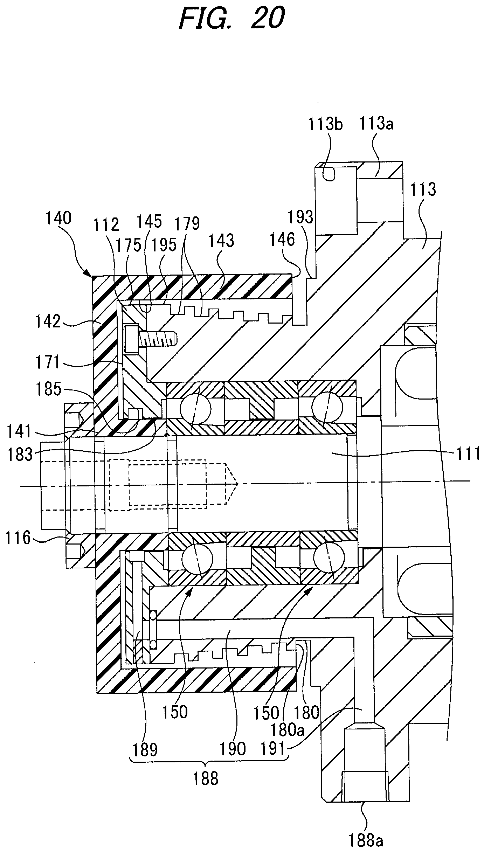

Next, a ninth Example will be described with reference to Fig. 20. The spindle apparatus according to the present Example is different from the seventh Example in the configuration of the outer cylinder. The other portions are the same as those of the spindle apparatus according to the seventh Example, and accordingly, the same portions are designated by the same or similar reference numerals and the description thereof will be simplified or omitted.

An outer cylinder 113 of the present Example is configured such that, on an opposing surface 195 of an outer peripheral surface 193 thereof, a plurality of circumferential grooves 179 are provided in a recessed manner and a radial distance from a rotary shaft 111 to the plurality of circumferential grooves 179 is decreased along the axially rearward direction, i.e., in the axial direction away from a disk portion 142 of a flinger 140. A radial distance from the rotary shaft 111 to the annular groove 180 is smaller than the radial distance from the rotary shaft 111 to any one of the circumferential grooves 179.

Therefore, according to the spindle apparatus 110A of the present Example, in particular, when the spindle apparatus 110A is used in a horizontal direction (a state where an axial direction thereof is perpendicular to a gravity direction), machining liquid can be easily gathered in the circumferential grooves 179 and the annular groove 180 on the axially rearward side by effect of gravity, but difficult to enter a labyrinth gap.

### Third Embodiment

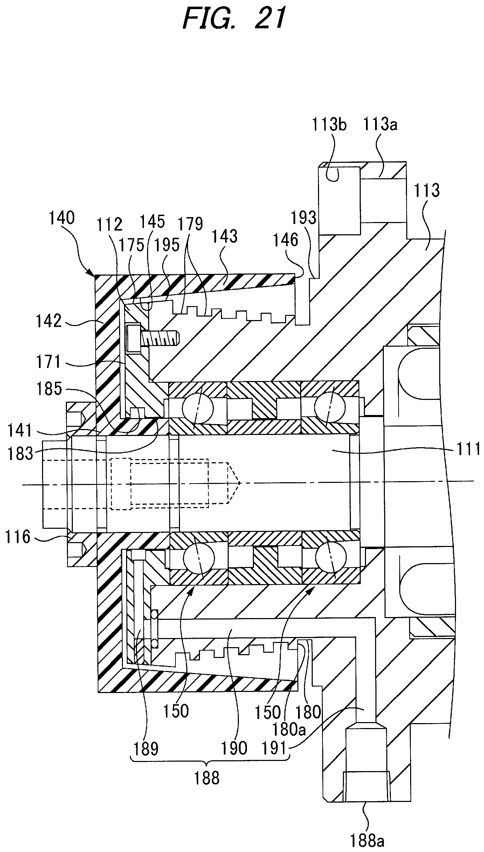

Next, a third embodiment of a spindle apparatus of the present invention will be described with reference to Fig. 21. The spindle apparatus according to the present embodiment is different from the ninth Example in the configuration of the flinger. The other portions are the same as those of the spindle apparatus according to the ninth Example, and accordingly, the same portions are designated by the same or similar reference numerals and the description thereof will be simplified or omitted.

An inner peripheral surface 145 of an annular portion 143 of the flinger 140 of the present embodiment is formed in a tapered shape, in which a radial distance thereof from a rotary shaft 111 is increased along the axially rearward direction. Therefore, centrifugal force to be exerted on machining liquid adhered on the inner peripheral surface 145 of the annular portion 143 is increased along the axially rearward direction. Thus, even if machining liquid enters a labyrinth gap, an effect of guiding the machining liquid by the inner peripheral surface 145 of the annular portion 143 and thus discharging the machining liquid to the outside can be enhanced. Alternatively, the inner peripheral surface 145 may have a substantially stepped shape, in which a radial distance thereof from the rotary shaft 11 is increased along the axially rearward direction.

The present invention is not limited to the third embodiment described above, and changes and modifications may optionally be made therein. The flinger 140 may be at least partially formed of a carbon fiber composite material, and for example, the radially outer side of the flinger 140 may formed of the carbon fiber composite material and the radially inner side thereof may be formed of a metal, such as SC, SCM, SUS, AL, or CU material.

In addition, in each of the foregoing embodiments, the circumferential grooves 179 may be provided in a recessed manner on an opposing surface of an outer peripheral surface of the housing 100H that is radially opposed to the annular portion 143 of the flinger 140, and also may be provided in a recessed manner on the outer peripheral surface 175 of the front bearing outer ring retainer 112, for example.

### Tenth Example

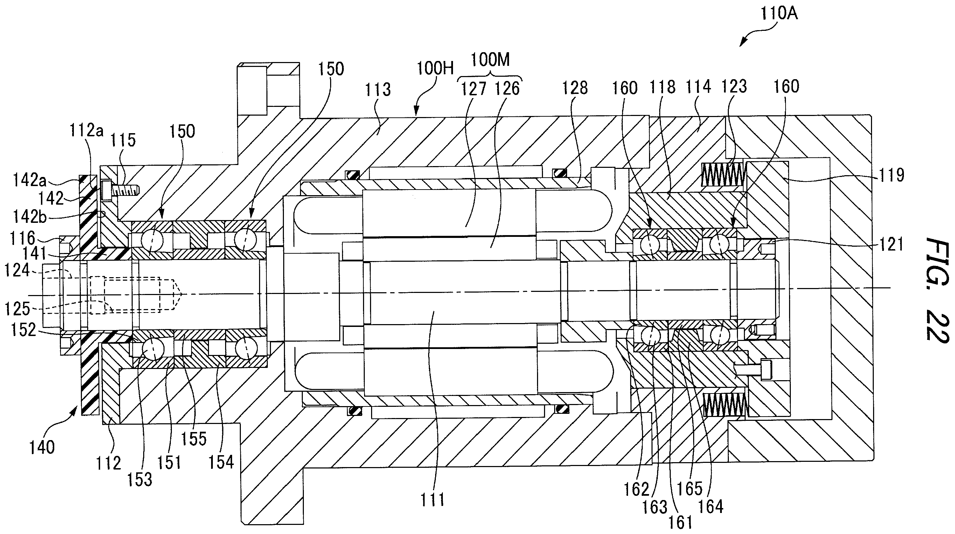

Now, a tenth Example will be described. Fig. 22 is a sectional view of a main portion of the spindle apparatus according to the tenth Example, which is different from the foregoing Examples in the configuration of the flinger. The other portions are the same as those of the spindle apparatus according to the sixth Example, except that the circumferential grooves 179, the annular grooves 185 and the drain groove 188 are not provided, and accordingly, the same portions are designated by the same or similar reference numerals and the description thereof will be simplified or omitted.

A flinger 140 according to the present Example has a boss portion 141 as a base portion fitted outside a rotary shaft 111, and a disk portion 142 extending radially outward from the boss portion 141. An outer peripheral part 142a of the disk portion 142 forms a distal end of the flinger 140 and is located radially more inward than a front bearing outer ring retainer 112.

The flinger 140 is arranged to be opposed to the front bearing outer ring retainer 112 with slight axial and radial gaps therebetween, thereby forming a so-called labyrinth seal. Namely, an axial inside end surface 142b of the disk portion 142, including the outer peripheral part 142a thereof, is axially opposed to an axial end surface 112a of the front bearing outer ring retainer 112 with interposing therebetween a slight gap, for example, a gap of about 0.5 mm.

Therefore, an air curtain is formed between the axial inside end surface 142b of the outer peripheral part 142a of the disk portion 142 and the axial end surface 112a of the front bearing outer ring retainer 112 due to a difference in peripheral speed thereof, thereby forming a waterproof mechanism that prevents machining liquid, which falls on the spindle apparatus 100A when a workpiece is machined, from entering front bearings 150, 150. Also, even if machining liquid or dust enters a labyrinth region, the machining liquid or dust can be discharged to the outside through the outer peripheral part 142a of the disk portion 142 by a throw-off effect due to centrifugal force of the flinger 140, thereby preventing the machining liquid or dust from entering the main shaft.

The flinger 140 is formed of a carbon fiber composite material (CFRP), which has a high tensile strength and a small specific gravity as compared with a metal. The details of the carbon fiber composite material (CFRP) are identical to those of the first Example, and accordingly the description thereof will be omitted. Alternatively, although the flinger 140 is entirely formed of the carbon fiber composite material, at least a part thereof may be formed of the carbon fiber composite material.

As described above, according to the spindle apparatus 110A of the present Example, at least a portion of the flinger 140 fixed to the rotary shaft 111 in an integrally rotatable manner and forming a portion of a waterproof mechanism that prevents machining liquid from entering the front bearings 150, 150, is formed of the carbon fiber composite material, and therefore a mass thereof is smaller as compared with a metal, so that centrifugal force is decreased if rotation speed is the same, thereby reducing an influence of the centrifugal force on the flinger 140. In addition, because the tensile strength is higher as compared with a metal, deformation due to the centrifugal force is further suppressed. Thus, the rotary shaft 111 can be rotated at a higher speed, namely can be used even when a dmn value of the bearings is 1 million or larger, more preferably 1.5 million or larger, and also, a restriction on a size of the flinger 140 can be significantly relaxed so that a radial length thereof can be increased and thus a lengthened labyrinth can be obtained, thereby achieving a good waterproof performance.

Also, because the flinger 40 is arranged to be opposed to the front bearing outer ring retainer 112 of a housing 100H, with a slight gap therebetween, the flinger 140 and the front bearing outer ring retainer 112 can form a labyrinth seal, which is a non-contact seal, and therefore, machining liquid can be prevented from entering the front bearings 150, 150 in a stable manner for a long time. Further, due to a weight reduction of the flinger 140, inertia thereof in a rotation direction can be decreased to reduce a time taken for acceleration and deceleration, and also a cycle time can be reduced, thereby anticipating enhancement of production efficiency. In addition, a mass of the distal end of the rotary shaft 111 can be reduced to increase a characteristic value of the rotary shaft 111, thereby allowing rotation at a higher speed and also reducing vibration during high-speed rotation.

Also, the flinger 140 has the boss portion 141 fitted outside the rotary shaft 111, and the disk portion 142 extending radially outward from the boss portion 141, the outer peripheral part 142a of the disk portion 142 forms the distal end of the flinger 140, and the outer peripheral part 142a of the disk portion 142 is opposed to the axial end surface 112a of the front bearing outer ring retainer 112 with a slight gap therebetween. Therefore, even if machining liquid or dust enters a labyrinth region, the machining liquid or dust can be discharged to the outside through the outer peripheral part 142a of the disk portion 142 by a throw-off effect due to centrifugal force of the flinger 140, thereby preventing the machining liquid or dust from entering the main shaft. Also, for example by using as a vertical spindle apparatus in which machining is performed by a tool oriented downward, machining liquid, which has entered the labyrinth region, can be discharged through the outer peripheral part 142a of the disk portion 142 during stop, thereby preventing the machining liquid from being stayed in the labyrinth region.

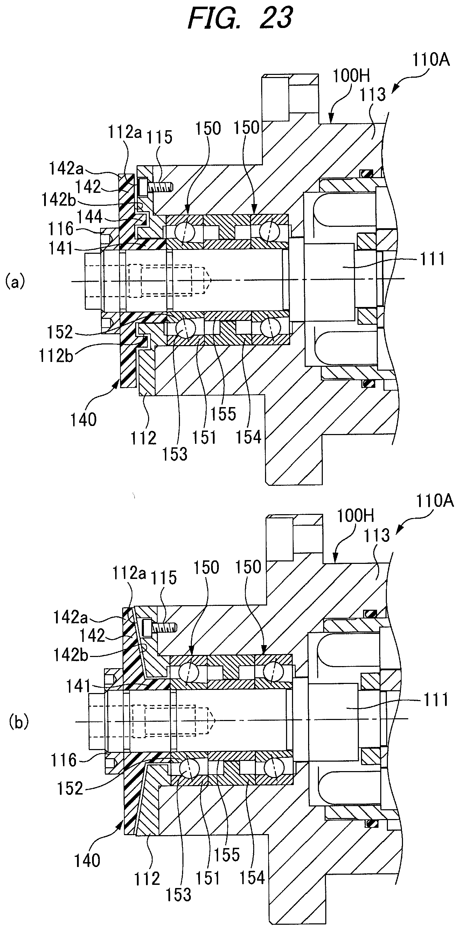

Figs. 23(a) and 23(b) are sectional views showing a part of modified examples of the present Example. In a flinger 140 shown in Fig. 23(a), a protrusion 144 protruding toward a front bearing outer ring retainer 112 is formed on a surface of the radial middle of a disk portion 142 opposed to the front bearing outer ring retainer 112. Also, a recess 112b facing the protrusion 144 of the flinger 140 and capable of receiving the protrusion 144 with a slight gap therebetween is formed on a surface of the front bearing outer ring retainer 112 opposed to the flinger 140. Therefore, the labyrinth region can be configured to be elongated by the protrusion 144 of the flinger 140, thereby enhancing a waterproof performance. Further, also in this modified example, the outer peripheral part 142a of the disk portion 140 forming the distal end of the flinger 140 is opposed to the axial end surface 112a of the front bearing outer ring retainer 112 with a slight gap therebetween, and therefore, by using as a vertical spindle apparatus, machining liquid, which has entered the labyrinth region, can be discharged by the outer peripheral part 142a of the disk portion 142 during stop, thereby preventing the machining liquid from being stayed in the labyrinth region.

Also, in a flinger 140 shown in Fig. 23(b), an axial inside end surface 142b of a disk portion 142 and an axial end surface 112a of a front bearing outer ring retainer 112, which opposed to each other, are formed in a tapered shape to be gradually axially inclined toward the tool side thereof along the radially outward direction. By applying such a flinger 140 to a vertical spindle apparatus, machining liquid, which has entered the labyrinth region, can be more efficiently discharged through the outer peripheral part 142a of the disk portion 142 during stop, thereby more securely preventing the machining liquid from being stayed in the labyrinth region.

### Eleventh Example

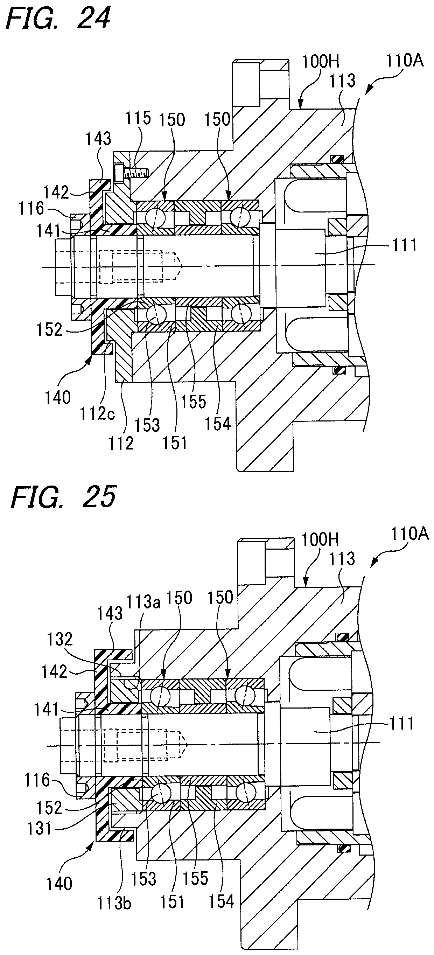

Next, an eleventh Example will be described with reference to Fig. 24. The same portion as those of the spindle apparatus according to the tenth Example are designated by the same or similar reference numerals and the description thereof will be simplified or omitted.

Like the tenth Example, a housing 100H includes an outer cylinder 113 fitted outside outer rings 151 of front bearings 150, and a front bearing outer ring retainer 112 fixed on an axial end surface of the outer cylinder 113 to position the outer rings 151 with respect to the axial direction. A stepped portion 112c is provided between an axial outer end surface and an outer peripheral surface of the front bearing outer ring retainer 112.

A flinger 140 has a boss portion 141 fitted outside a rotary shaft 11, a disk portion 142 extending radially outward from the boss portion 141, and an annular portion 143 extending rearward (a direction toward the front bearing outer ring retainer 112) from an outer peripheral part of the disk portion 42 in a ring shape.

The annular portion 143 is radially opposed to an outer peripheral surface of the stepped portion 112c with interposing therebetween a slight gap, for example, a gap of 0.5 mm or less. Therefore, according to the present Example, as compared with the tenth Example, a radial labyrinth region is added between an inner peripheral surface of the annular portion 143 and an outer peripheral surface of the stepped portion 112c, thereby enhancing a waterproof performance. Also, because an outer peripheral surface of the annular portion 143 of the flinger 140 is arranged radially more inward than an outer peripheral surface of the housing 100H, for example in a case of a pivotable spindle apparatus, the housing 100H can be first interfered with an obstacle upon pivoting, thereby preventing damage of the flinger 140.

The flinger 140 is formed of a carbon fiber composite material, so that centrifugal force exerted on the annular portion 143 of the flinger 140 is decreased, thereby preventing an opening side (the right side in the figures) of the annular portion 43, which is a cantilever structure having a relatively low strength, from being radially outwardly enlarged in diameter.

Thus, according to the spindle apparatus 110A of the present Example, in addition to the effect of the tenth Example obtained by forming the flinger 140 by the carbon fiber composite material, because the annular portion 143 of the flinger 140 is radially opposed to the outer peripheral surface of the stepped portion 112c of the outer ring retainer 112 with a slight gap therebetween, a radial labyrinth region can be added, thereby enhancing a waterproof performance.

The flinger 140 as in the present Example, which has the annular portion 143, is preferably applied to a spindle apparatus, in which a tool is used in an upward direction rather than horizontal, other than a horizontal spindle apparatus in which a tool is used in a horizontal direction.

### Twelfth Example

Next, a twelfth Example will be described with reference to Fig. 25. The same portion as those of the spindle apparatuses according to the tenth and eleventh Examples are designated by the same or similar reference numerals and the description thereof will be simplified or omitted.

A housing 100H according to the present Example includes an outer cylinder 113 fitted onto outer rings 151 of front bearings 150, and a front bearing outer ring retainer 131 screwed and fixed in a threaded hole 113a formed in an inner peripheral surface of the outer cylinder 113 to position the outer rings 151 with respect to the axial direction. Thus, a coupling interface 132 between the outer cylinder 113 and the front bearing outer ring retainer 131 is formed toward an axial end surface of the housing 100H. A stepped portion 113b is provided between an axial outer end surface and an outer peripheral surface of the outer cylinder 113.

A flinger 140 has a boss portion 141 fitted outside a rotary shaft 11, a disk portion 142 extending radially outward from the boss portion 141, and an annular portion 143 extending rearward (a direction toward the front bearing outer ring retainer 131) from an outer peripheral part of the disk portion 142 in a ring shape. The annular portion 143 is radially opposed to an outer peripheral surface of the stepped portion 113b with interposing therebetween a slight gap, for example, a gap of 0.5 mm or less.

The disk portion 142 of the flinger 140 is axially opposed to the coupling interface 132 between the outer cylinder 113 and the front bearing outer ring retainer 131, with a slight gap therebetween.

Thus, according to the spindle apparatus 110A of the present Example, in addition to the effect of the tenth Example obtained by forming the flinger 140 by the carbon fiber composite material, because the disk portion 142 of the flinger 140 is opposed to the coupling interface 132 between the outer cylinder 113 and the front bearing outer ring retainer 131 with interposing a slight axial gap therebetween, the coupling interface 132 is located inside a labyrinth, thereby preventing machining liquid from entering through the coupling interface 132.

### Thirteenth Example

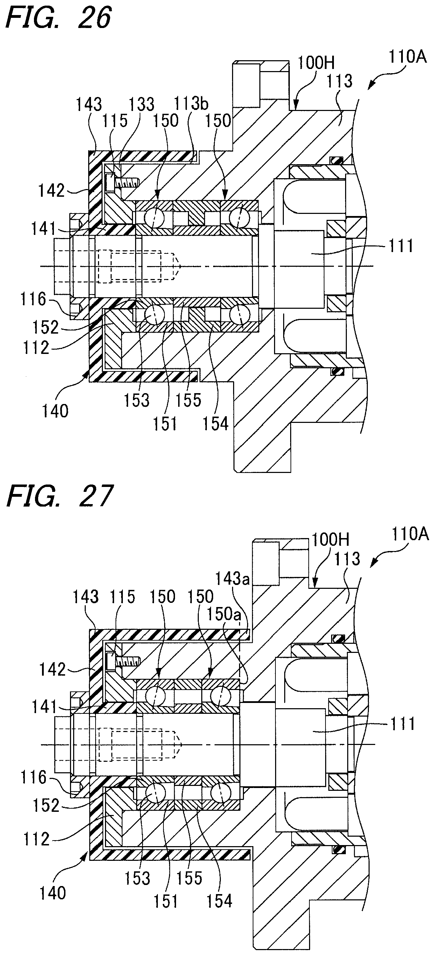

Next, a thirteenth Example will be described with reference to Fig. 26. The same portion as those of the spindle apparatuses according to the tenth to twelfth Examples are designated by the same or similar reference numerals and the description thereof will be simplified or omitted.

A housing 100H includes an outer cylinder 113 fitted onto outer rings 151 of front bearings 150, and a front bearing outer ring retainer 112 fixed on an axial end surface of the outer cylinder 113 to position the outer rings 151 with respect to the axial direction. Thus, a coupling interface 133 between the outer cylinder 113 and the front bearing outer ring retainer 112 is formed toward an outer peripheral surface of the housing 100H. A stepped portion 113b is provided between an axial outer end surface and an outer peripheral surface of the outer cylinder 113, and the front bearing outer ring retainer 112 is designed to have substantially the same outer diameter as that of an outer peripheral surface of the stepped portion 113b.

A flinger 140 has a boss portion 141 fitted outside a rotary shaft 11, a disk portion 142 extending radially outward from the boss portion 141, and an annular portion 143 extending rearward (a direction toward the front bearing outer ring retainer 131) from an outer peripheral part of the disk portion 142 in a ring shape. The annular portion 143 is radially opposed to an outer peripheral surface of the front bearing outer ring retainer 112 and an outer peripheral surface of the stepped portion 113b with interposing therebetween slight gaps, for example, gaps of 0.5 mm or less.

The disk portion 142 of the flinger 140 is radially opposed to the coupling interface 133 between the outer cylinder 113 and the front bearing outer ring retainer 131, with a slight gap therebetween.

Thus, according to the spindle apparatus 110 of the present Example, in addition to the effect of the tenth Example obtained by forming the flinger 140 by the carbon fiber composite material, because the flinger 140 is opposed to the coupling interface 133 between the outer cylinder 113 and the front bearing outer ring retainer 131 with interposing a slight radial gap therebetween, the coupling interface 133 is located inside a labyrinth, thereby preventing machining liquid from entering through the coupling interface 133.

### Fourteenth Example

Next, a fourteenth Example will be described with reference to Fig. 27. The same portion as those of the spindle apparatuses according to the tenth to thirteenth Example are designated by the same or similar reference numerals and the description thereof will be simplified or omitted.

A housing 100H includes an outer cylinder 113 fitted onto outer rings 151 of front bearings 150, and a front bearing outer ring retainer 112 fixed on an axial end surface of the outer cylinder 113 to position the outer rings 151 with respect to the axial direction.

A flinger 140 has a boss portion 141 fitted outside a rotary shaft 11, a disk portion 142 extending radially outward from the boss portion 141, and an annular portion 143 extending rearward (a direction toward the front bearing outer ring retainer 131) from an outer peripheral part of the disk portion 142 in a ring shape. The annular portion 143 has a length extending slightly beyond an axial inner end surface 150a of the front bearings 150 and is radially opposed to an outer peripheral surface of the front bearing outer ring retainer 112 and an outer peripheral surface of the outer cylinder 113 with interposing therebetween slight gaps, for example, gaps of 0.5 mm or less.

Thus, according to the spindle apparatus 110A of the present Example, in addition to the effect of the tenth Example obtained by forming the flinger 140 by the carbon fiber composite material, because the annular portion 143 of the flinger 140 has a length extending slightly beyond an axial inner end surface 150a of the front bearings 150 and is radially opposed to an outer peripheral surface of the housing 100H with interposing therebetween a slight gap, the housing H can be prevented from being excessively cooled by machining liquid adhered on the housing H, thereby reducing a difference in temperature between the outer rings 151 and the inner rings 152 of the front bearings 150 and suppressing increase in preload of the front bearings 150, to which, for example, a position preload is applied.

In a case where a dmn value of bearings is 1 million or smaller, preferably 8 hundred thousand or smaller, more preferably 5 hundred thousand or smaller, or the like, a metal material, which is used in a conventional main shaft, may be used as a material for the flingers 40, 140 of the present invention, as long as withstanding a hoop stress incurred by an action of a generated centrifugal force.

### Explanation of Reference Signs

- 10: Spindle Apparatus
- 11: Rotary Shaft
- 31: Recess
- 40, 40A, 40B, 40C, 40D: Flinger (Rotating Member)
- 41: Boss Portion (Base Portion)
- 42: Disk Portion
- 43a: Radially Outer Annular Portion (Radially Outer Member)
- 43b: Radially Inner Annular Portion (Radially Inner Member)
- 44: Protrusion
- 45: Boundary surface
- 47a: Radially Outer Flinger (Radially Outer Member)
- 47b: Radially Inner Flinger (Radially Inner Member)
- 48: Inner Peripheral Surface
- 49: Outer Peripheral Surface
- 50: Front Bearing (Bearing)
- 60: Rear Bearing
- 71: Axial Front End Surface (Axial End Surface)
- 75: Outer Peripheral Surface
- 77: Tapered Portion
- 79: Circumferential Groove
- 80: Axial Front End (End Portion)
- 81: Large-Diameter Cylindrical Surface
- 82: Small-Diameter Cylindrical Surface
- 83: Inner Peripheral Surface
- 85: Annular Groove
- 87, 88: Drain Hole (Communication Hole)
- 100A: Spindle Apparatus
- 111: Rotary Shaft
- 112: Front Bearing Outer Ring Retainer
- 113: Outer Cylinder
- 140: Flinger
- 141: Boss Portion (Base Portion)
- 142: Disk Portion
- 143: Annular Portion
- 145: Inner Peripheral Surface
- 146: Axial Rear End Surface
- 150: Front Bearing (Bearing)
- 171: Axial Front End Surface (Axial End Surface)
- 175: Outer Peripheral Surface
- 179: Circumferential Groove
- 180: Annular Groove
- 180a: Axial Front End
- 183: Inner Peripheral Surface
- 185: Annular Groove
- 188: Drain Hole (Communication Hole)
- 193: Outer Peripheral Surface
- 195: Opposing Surface
- H: Housing
- 100H: Housing

## Claims

1. A spindle apparatus (10, 110A) comprising:
a rotary shaft (11, 111);
a front bearing (50, 150) supporting the rotary shaft (11, 111),
a housing (H, 100H) rotatably supporting the rotary shaft (11, 111) via the bearing (50, 150); and
a flinger (40, 40B, 40C, 40D, 140) fixed to the rotary shaft (11, 111) in an integrally rotatable manner and forming at least a portion of a waterproof mechanism that prevents a liquid from entering the bearing (50, 150),
wherein the flinger (40, 40B, 40C, 40D, 140) comprises a base portion (41, 141) fixed on the rotary shaft (11, 111), a disk portion (42, 142) extending radially outward from the base portion (41, 141) and arranged to be axially opposed to an axial end surface (71, 171) of the housing (H, 100H) with a slight gap therebetween, and an annular portion (43, 143) axially extending from the disk portion (42, 142) and arranged to be radially opposed to an outer peripheral surface (75, 175, 193) of the housing (H, 100H) with a slight gap therebetween, and
at least one circumferential groove (79, 179) is provided in a recessed manner on an opposing surface (195) of the outer peripheral surface (75, 193) of the housing (100H) that is radially opposed to the annular portion (43, 143),
**characterized in that**
the annular portion (43, 143) has a tapered shape, a thickness of which is reduced along an axial direction away from the disk portion (42, 142), and
an inner peripheral surface (48, 145) of the annular portion (43, 143) is a tapered surface, a radial distance of which from the rotary shaft (11, 111) is increased along an axial direction away from the disk portion (42, 142) of the flinger (40C, 140).

2. The spindle apparatus (10, 110A) according to claim 1, **characterized in that** an end portion (80) of the circumferential groove (79, 179) on a side of the disk portion (42, 142) overlaps the annular portion (43, 143) with respect to the axial direction.

3. The spindle apparatus (10, 110A) according to claim 1 or 2, **characterized in that** at least a portion of the flinger (40, 40B, 40C, 40D, 140) is formed of a carbon fiber composite material.

## Patentansprüche

1. Spindel-Vorrichtung (10, 110A), die umfasst:
eine Drehwelle (11, 111);
ein vorderes Lager (50, 150), das die Drehwelle (11, 111) aufnimmt,
ein Gehäuse (H, 100H), das die Drehwelle (11, 111) über das Lager (50, 150) drehbar aufnimmt; sowie
einen Schleuderring (40, 40B, 40C, 40D, 140), der an der Drehwelle (11, 111) integral drehbar befestigt ist und wenigstens einen Abschnitt eines wasserdichten Mechanismus bildet, der verhindert, dass eine Flüssigkeit in das Lager (50, 150) eindringt,
wobei der Schleuderring (40, 40B, 40C, 40D, 140) einen Basis-Abschnitt (41, 141), der an der Drehwelle (11, 111) befestigt ist, einen Scheiben-Abschnitt (42, 142), der sich von dem Basis-Abschnitt (41, 141) radial nach außen erstreckt und so angeordnet ist, dass er einer axialen Endfläche (71, 171) des Gehäuses (H, 100H) mit einem geringfügigen Zwischenraum zwischen ihnen axial gegenüberliegt, sowie einen ringförmigen Abschnitt (43, 143) umfasst, der sich axial von dem Scheiben-Abschnitt (42, 142) aus erstreckt und so angeordnet ist, dass er einer Außenumfangsfläche (75, 175, 193) des Gehäuses (H, 100H) mit einem geringfügigen Zwischenraum zwischen ihnen radial gegenüberliegt, und
wenigstens eine Umfangsnut (79, 179) vertieft an einer gegenüberliegenden Fläche (195) der Außenumfangsfläche (75, 193) des Gehäuses (100H) vorhanden ist, die dem ringförmigen Abschnitt (43, 143) radial gegenüberliegt,
**dadurch gekennzeichnet, dass**
der ringförmige Abschnitt (43, 143) eine sich verjüngende Form hat, deren Dicke in einer axialen Richtung von dem Scheiben-Abschnitt (42, 142) weg abnimmt, und
eine Innenumfangsfläche (48, 145) des ringförmigen Abschnitts (43, 143) eine sich verjüngende Fläche ist, deren radialer Abstand zu der Drehwelle (11, 111) in einer axialen Richtung von dem Scheiben-Abschnitt (42, 142) des Schleuderrings (40C, 41) weg zunimmt.

2. Spindel-Vorrichtung (10, 110A) nach Anspruch 1, **dadurch gekennzeichnet, dass** ein Endabschnitt (80) der Umfangsnut (79, 179) an einer Seite des Scheiben-Abschnitts (42, 142) den ringförmigen Abschnitt (43, 143) in Bezug auf die axiale Richtung überlappt.

3. Spindel-Vorrichtung (10, 110A) nach Anspruch 1 oder 2, **dadurch gekennzeichnet, dass** wenigstens ein Abschnitt des Schleuderrings (40, 40B, 40C, 40D, 140) aus einem Kohlefaser-Verbundmaterial besteht.

## Revendications

1. Appareil à broche (10,110A) comprenant:
un arbre rotatif (11,111);
un palier avant (50, 150) supportant l'arbre rotatif (11, 111), un logement (H, 100H) supportant en rotation l'arbre rotatif (11, 111) par l'intermédiaire du palier (50, 150); et
un déflecteur (40, 40B, 40C, 40D, 140) fixé à l'arbre rotatif (11, 111) en rotation intégrale et formant au moins une partie d'un mécanisme étanche à l'eau empêchant un liquide d'entrer dans le palier (50,150),
dans lequel le déflecteur (40, 40B, 40C, 40D, 140) comprend une partie de base (41, 141) fixée sur l'arbre rotatif (11, 111), une partie de disque (42, 142) s'étendant radialement vers l'extérieur depuis la partie de base (41, 141) et agencée opposée axialement à une surface d'extrémité axiale (71, 171) du boîtier (H, 100H) avec un léger espace les séparant, et une pièce annulaire (43, 143) s'étendant axialement à partir de la partie disque (42, 142) et agencée radialement opposée à une surface périphérique externe (75, 175, 193) du boîtier (H, 100M) séparé par un léger espace, et
au moins une gorge circonférentielle (79, 179) est ménagée de manière évidée sur une surface opposée (195) de la surface périphérique extérieure (75, 193) du boîtier (100H) qui est radialement opposée à la partie annulaire (43, 143), **caractérisé en ce que**
la partie annulaire (43, 143) est de forme conique dont l'épaisseur est réduite le long d'une direction axiale à l'opposé de la partie disque (42, 142), Et une surface périphérique intérieure (48, 145) de la partie annulaire (43, 143) est une surface conique, dont on augmente la distance radiale par rapport à l'arbre rotatif (11, 111) dans une direction axiale à l'écart de la partie disque (42, 142) du déflecteur (40C, 140).

2. Appareil à broche (10, 110A) selon la revendication 1, **caractérisé en ce qu'**une partie d'extrémité (80) de la gorge circonférentielle (79, 179) située sur un côté de la partie disque (42, 142) chevauche la partie annulaire (43, 143) par rapport à la direction axiale.

3. Appareil à broche (10, 110A) selon les revendications 1 ou 2, **caractérisé en ce qu'**au moins une partie du déflecteur (40, 40B, 40C, 40D, 140) est constituée d'un matériau composite à base de fibres de carbone.
